# EUROPEAN PATENT APPLICATION

(11) **EP 4 697 150 A1**
(43) Date of publication of application: **18.02.2026**
(21) Application number: 25719949.7
(22) Date of filing: 18.04.2025
(51) Int. Cl.: G06F 3/0484, G06F 3/0481, G06F 1/16, G01P 15/14

(54) **FOLDABLE ELECTRONIC DEVICE FOR DISPLAYING PLURALITY OF APPLICATIONS IN PARTIALLY FOLDED STATE AND CONTROL METHOD THEREOF**

(30) Priority: 28.06.2024 KR 20240085485; 27.08.2024 KR 20240115168
(71) Applicant: Samsung Electronics Co., Ltd., Suwon-si, Gyeonggi-do 16677 (KR)
(72) Inventor: BAE, Hyerim, Suwon-si, Gyeonggi-do 16677 (KR); KIM, Kibeom, Suwon-si, Gyeonggi-do 16677 (KR); BYUN, Ikjoo, Suwon-si, Gyeonggi-do 16677 (KR); LEE, Chanwoo, Suwon-si, Gyeonggi-do 16677 (KR); LIM, Euisang, Suwon-si, Gyeonggi-do 16677 (KR); CHOI, Wonsun, Suwon-si, Gyeonggi-do 16677 (KR); SHIM, Jaesung, Suwon-si, Gyeonggi-do 16677 (KR)
(74) Representative: Appleyard Lees IP LLP
(86) International application number: PCT/KR2025/005327
(87) International publication number: WO 2026/005237

(57) **Abstract**

A foldable electronic device (1000) according to the disclosure for displaying a plurality of applications in a partially folded state and a control method thereof. The foldable electronic device (1000) includes a first housing part (110), a second housing part (120) rotatably coupled to the first housing part (110), a third housing part (130) rotatably coupled to the second housing part (120), a first hinge structure (150) rotatably connecting the first housing part (110) and the second housing part (120), a second hinge structure (160) rotatably connecting the second housing part (120) and the third housing part (130), a first display (331) arranged on one surface of each of the first housing part (110), the second housing part (120), and the third housing part (130), a second display (332) arranged in a partial area of another surface on the opposite side of the first display (331).

## Description

### [BACKGROUND OF THE INVENTION]

### [Technical Field]

The disclosure relates to a foldable electronic device that displays a screen based on a change of a state, and a method of displaying a screen of the foldable electronic device.

### [Background Art]

Recently, as electronic technologies have developed, electronic devices including modifiable form factors are being developed. For example, an electronic device such as a foldable phone is a representative example of this. Such an electronic device can provide various states such as a folded state by folding, an unfolded state, or a partially folded state.

### [Disclosure]

### [Technical Solution]

According to a first aspect of the invention, there is provided, a foldable electronic device including a first housing part, a second housing part rotatably coupled to the first housing part, a third housing part rotatably coupled to the second housing part, a first hinge structure rotatably connecting the first housing part and the second housing part, a second hinge structure rotatably connecting the second housing part and the third housing part, a first display arranged on one surface of each of the first housing part, the second housing part, and the third housing part, a second display arranged in a partial area of another surface on the opposite side of the first display, at least one first sensor configured to detect a first folding angle between the first housing part and the second housing part, at least one second sensor configured to detect a second folding angle between the second housing part and the third housing part, at least one third sensor configured to detect a rotation of the foldable electronic device, memory storing instructions and including at least one storage medium, and at least one processor including processing circuitry, wherein the instructions are configured to, when executed by the at least one processor individually or collectively, cause the foldable electronic device to, in a horizontal mode of the foldable electronic device, display a first application in a first area, and display a second application in a second area divided based on a boundary according to a multi-windows mode, and based on detecting a rotation of the foldable electronic device through the at least one third sensor, identify the foldable electronic device as a vertical mode, identify whether any one of the first housing part or the third housing part is in a partially folded state based on the first folding angle detected through the first sensor and the second folding angle detected through the second sensor, and based on identifying that the first housing part is in the partially folded state in the vertical mode, display the first application and the second application in each of the first area and the second area divided on the basis of a first boundary due to the partially folded state of the first housing part, and based on identifying that the third housing part is in the partially folded state in the vertical mode, display the first application and the second application in each of the first area and the second area divided on the basis of a second boundary due to the partially folded state of the third housing part.

According to a second aspect of the invention, there is provided a control method of a foldable electronic device, the foldable electronic device including a first housing part, a second housing part rotatably coupled to the first housing part, a third housing part rotatably coupled to the second housing part, a first hinge structure rotatably connecting the first housing part and the second housing part, a second hinge structure rotatably connecting the second housing part and the third housing part, a first display arranged on one surface of each of the first housing part, the second housing part, and the third housing part, a second display arranged in a partial area of another surface on the opposite side of the first display, at least one first sensor configured to detect a first folding angle between the first housing part and the second housing part, at least one second sensor configured to detect a second folding angle between the second housing part and the third housing part, and at least one third sensor configured to detect a rotation of the foldable electronic device, wherein the method includes the steps of, in a horizontal mode of the foldable electronic device, displaying a first application in a first area, and displaying a second application in a second area divided based on a boundary according to a multi-windows mode, and based on detecting a rotation of the foldable electronic device through the at least one third sensor, identifying the foldable electronic device as a vertical mode, identifying whether any one of the first housing part or the third housing part is in a partially folded state based on the first folding angle detected through the first sensor and the second folding angle detected through the second sensor, and based on identifying that the first housing part is in the partially folded state in the vertical mode, displaying the first application and the second application in each of the first area and the second area divided on the basis of a first boundary due to the partially folded state of the first housing part, and based on identifying that the third housing part is in the partially folded state in the vertical mode, displaying the first application and the second application in each of the first area and the second area divided on the basis of a second boundary due to the partially folded state of the third housing part.

According to a third aspect of the invention, there is provided a storage medium storing instructions that can be read by a computer, wherein the instructions are configured to, when executed by at least one processor of a foldable electronic device including a first housing part, a second housing part rotatably coupled to the first housing, a third housing part rotatably coupled to the second housing, a first hinge structure rotatably connecting the first housing part and the second housing part, a second hinge structure rotatably connecting the second housing part and the third housing part, a first display arranged on one surface of each of the first housing part, the second housing part, and the third housing part, a second display arranged in a partial area of another surface on the opposite side of the first display, at least one first sensor configured to detect a first folding angle between the first housing part and the second housing part, at least one second sensor configured to detect a second folding angle between the second housing part and the third housing part, and at least one third sensor configured to detect a rotation of the foldable electronic device, cause the foldable electronic device to, in a horizontal mode of the foldable electronic device, display a first application in a first area, and display a second application in a second area divided based on a boundary according to a multi-windows mode, based on detecting a rotation of the foldable electronic device through the at least one third sensor configured to detect a rotation of the foldable electronic device, identify the foldable electronic device as a vertical mode, identify whether any one of the first housing part or the third housing part is in a partially folded state based on the first folding angle detected through the first sensor and the second folding angle detected through the second sensor, based on detecting that the first housing part is in the partially folded state in the vertical mode, display the first application and the second application in each of the first area and the second area divided on the basis of a first boundary due to the partially folded state of the first housing part, and based on detecting that the third housing part is in the partially folded state in the vertical mode, display the first application and the second application in each of the first area and the second area divided on the basis of a second boundary due to the partially folded state of the third housing part.

### [Description of Drawings]

FIG. 1A illustrates an example of a first state of an electronic device according to an embodiment of the disclosure;
FIG. 1B illustrates an example of a second state of an electronic device according to an embodiment of the disclosure;
FIG. 1C illustrates an example of a third state of an electronic device according to an embodiment of the disclosure;
FIG. 2A is a plan view of an electronic device wherein a first display has been removed according to an embodiment of the disclosure;
FIG. 2B is a rear view of an electronic device wherein a rear cover and a second display have been removed according to an embodiment of the disclosure;
FIG. 3A is a block diagram of an exemplary electronic device that can perform operations explained in the disclosure;
FIG. 3B is a block diagram of an exemplary electronic device that can perform operations explained in the disclosure;
FIG. 4 is a diagram for illustrating a display mode of an electronic device providing a plurality of applications according to an embodiment of the disclosure;
FIG. 5 is a diagram for illustrating an electronic device providing a plurality of applications in a partially folded state according to an embodiment of the disclosure;
FIG. 6A is a diagram for illustrating an electronic device providing a plurality of applications based on a boundary due to a partially folded state according to an embodiment of the disclosure;
FIG. 6B is a diagram for illustrating an electronic device providing a plurality of applications based on a boundary due to a partially folded state according to an embodiment of the disclosure;
FIG. 6C is a diagram for illustrating an electronic device providing a plurality of applications based on a boundary due to a partially folded state according to an embodiment of the disclosure;
FIG. 6D is a diagram for illustrating an electronic device providing a plurality of applications based on a boundary due to a partially folded state according to an embodiment of the disclosure;
FIG. 7 is a flow chart for illustrating an electronic device providing a plurality of applications based on a boundary due to a partially folded state according to an embodiment of the disclosure;
FIG. 8 is a diagram for illustrating a horizontal mode layout and a vertical mode layout of an application according to an embodiment of the disclosure;
FIG. 9 is a diagram for illustrating an electronic device that provides, when the electronic device is changed to a partially folded state from an unfolded state, a plurality of applications based on a boundary due to the partially folded state according to an embodiment of the disclosure;
FIG. 10 is a flow chart for illustrating an electronic device that provides, when the electronic device is changed to a partially folded state from an unfolded state, a plurality of applications based on a boundary due to the partially folded state according to an embodiment of the disclosure;
FIG. 11 is a diagram for illustrating a display mode of an electronic device providing a plurality of applications according to an embodiment of the disclosure;
FIG. 12 is a diagram for illustrating an electronic device providing a plurality of applications based on a boundary due to a partially folded state according to an embodiment of the disclosure; and
FIG. 13 is a flow chart for illustrating a control method of an electronic device according to an embodiment of the disclosure.

### [Mode for Invention]

Hereinafter, the disclosure will be described in detail with reference to the accompanying drawings.

As terms used in the embodiments of the disclosure, general terms that are currently used widely were selected as far as possible, in consideration of the functions described in the disclosure. However, the terms may vary depending on the intention of those skilled in the art, previous court decisions, or emergence of new technologies, etc. Also, in particular cases, there may be terms that were arbitrarily designated by the applicant, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in this specification, expressions such as "have," "may have," "include," and "may include" denote the existence of such characteristics (e.g.: elements such as numbers, functions, operations, and components), and do not exclude the existence of additional characteristics.

In addition, the expression "at least one of A and/or B" should be interpreted to mean any one of "A" or "B" or "A and B."

Further, expressions such as "first," "second," and the like used in this specification may be used to describe various elements regardless of any order and/or degree of importance, and are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Also, singular expressions include plural expressions, as long as they do not obviously mean differently in the context. Also, in the disclosure, terms such as "include" and "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

In addition, in the disclosure, the term "user" may refer to a person who uses an electronic device or a device using an electronic device (e.g.: an artificial intelligence electronic device).

Hereinafter, an embodiment of the disclosure will be described in more detail with reference to the accompanying drawings.

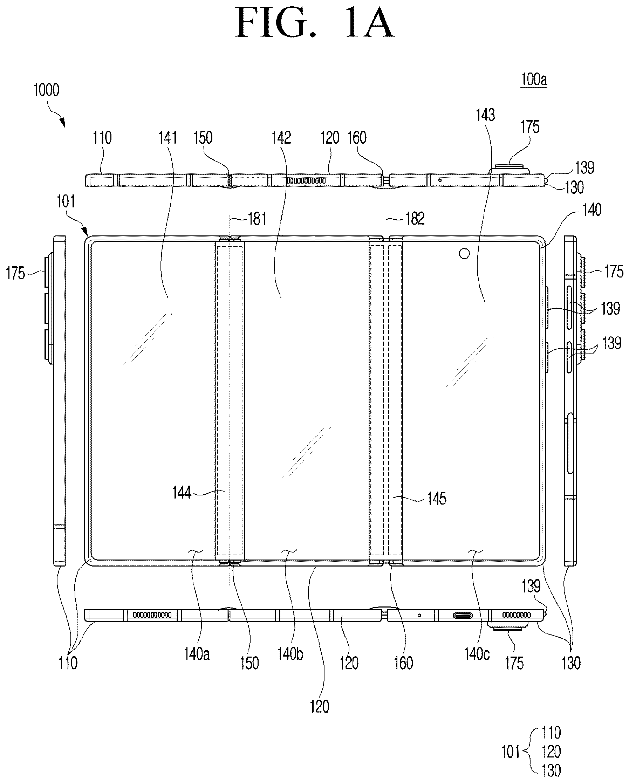

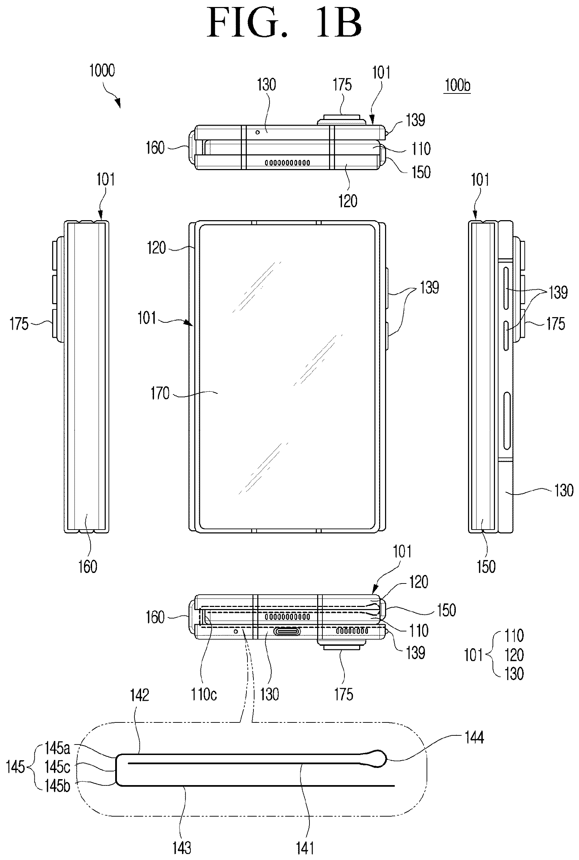

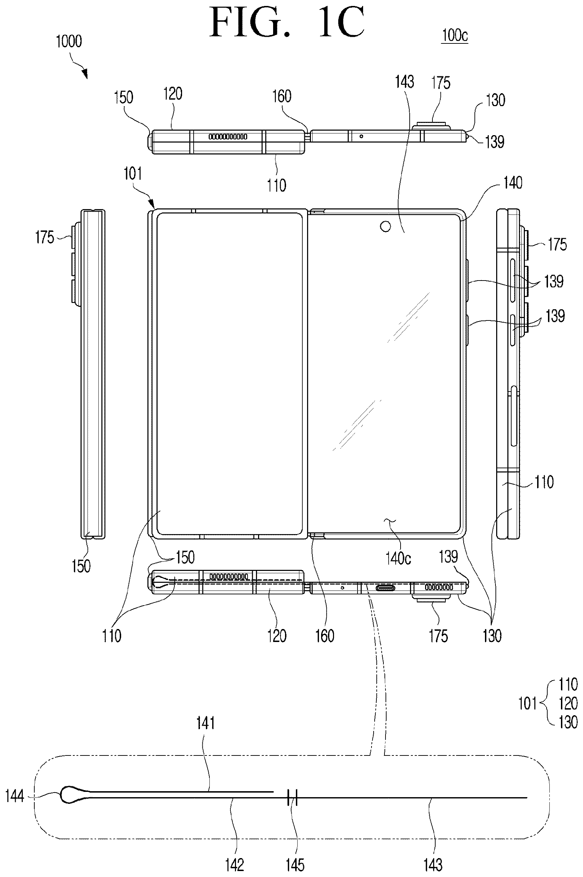

FIG. 1A illustrates an example of a first state of an electronic device according to an embodiment of the disclosure. FIG. 1B illustrates an example of a second state of an electronic device according to an embodiment of the disclosure. FIG. 1C illustrates an example of a third state of an electronic device according to an embodiment of the disclosure.

Referring to FIG. 1A, FIG. 1B, and FIG. 1C, an electronic device 1000 may include a housing structure 101, a flexible display 140, a first hinge structure 150, a second hinge structure 160, and a display 170.

The first housing structure 101 may include a first housing part 110, a second housing part 120, and a third housing part 130. The housing part may be replaced by, for example, expressions such as a housing, a body, or a frame.

The first housing part 110 may be rotatably coupled to the second housing part 120 by the first hinge structure 150. For example, the second housing part 120 may be rotatably coupled to one side of the first housing part 110 by the first hinge structure 150. The second housing part 120 and the first housing part 110 may be rotated with respect to the first hinge structure 150. While the first housing part 110 is rotated with respect to the first hinge structure 150, the second housing part 120 may be rotated with respect to the first hinge structure 150. For example, when the second housing part 120 and the first housing part 110 are rotated with respect to the first hinge structure 150, each displacement (or each change) of the second housing part 120 may be substantially identical to each displacement of the first housing part 110.

The third housing part 130 may be rotatably coupled to the second housing part 120 by the second hinge structure 160. The second housing part 120 and the third housing part 130 may be rotated with respect to the second hinge structure 160. While the second housing part 120 is rotated with respect to the second hinge structure 160, the third housing part 130 may be rotated with respect to the second hinge structure 160. For example, when the second housing part 120 and the third housing part 130 are rotated with respect to the second hinge structure 160, each displacement of the second housing part 120 may be substantially identical to each displacement of the third housing part 130.

The first hinge structure 150 and the second hinge structure 160 may change the state of the electronic device 1000.

The first hinge structure 150 and the second hinge structure 160 may provide (or may enable) a first state 100a of the electronic device 1000 (or a first state 100a of the housing structure 101). The first state 100a of the electronic device 1000 (or the first state 100a of the housing structure 101) may be explained as an unfolded state of the electronic device 100 (or the housing structure 101). For example, within the first state 100a, the first housing part 110, the second housing part 120, and the third housing part 130 may be unfolded. For example, within the first state 100a, the first housing part 110 and the second housing part 120 may constitute an angle of approximately 180 degrees, and the second housing part 120 and the third housing part 130 may constitute an angle of approximately 180 degrees. Within the first state 100a, the front surface of the first housing part 110, the front surface of the second housing part 120, and the front surface of the third housing part 130 may define the front surface of the electronic device 1000. Within the first state 100a, the front surface of the first housing part 110, the front surface of the second housing part 120, and the front surface of the third housing part 130 may be toward the same direction. Within the first state 100a, the electronic device 1000 may provide a big display area of the flexible display 140 to the user.

The first hinge structure 150 and the second hinge structure 160 may provide a second state 100b of the electronic device 1000 (or a second state 100b of the housing structure 101). The second state 100b of the electronic device 1000 (or the second state 100b of the housing structure 101) may be explained as a closed state (or a folded state or a multi-folded state) of the electronic device 1000 (or the housing structure 101). For example, within the second state 100b, the first housing part 110, the second housing part 120, and the third housing part 130 may be closed. For example, within the second state 100b, the first housing part 110 and the second housing part 120 may constitute an angle of approximately 0 - 10 degrees, and the second housing part 120 and the third housing part 130 may constitute an angle of approximately 0 - 10 degrees. Also, within the second state 100b, the front surface of the first housing part 110 and the front surface of the second housing part 120 may be toward opposite directions, and the front surface of the second housing part 120 and the front surface of the third housing part 130 may be toward opposite directions. In addition, within the second state 100b, the front surface of the first housing part 110 and the front surface of the third housing part 130 may be toward the same direction. For example, within the second state 100b, the front surface of the second housing part 120 may be toward the front surface of the first housing part 110, and the front surface of the third housing part 130 may be toward the rear surface of the first housing part 110. Also, within the second state 100b, the rear surface of the second housing part 120 may be exposed to the outside. The display 170 may be arranged on the rear surface of the second housing part 120. In addition, within the second state 100b, the rear surface of the third housing part 130 may be exposed to the outside. The camera 175 may be arranged on the rear surface of the third housing part 130. Further, within the second state 100b, the electronic device 1000 may be closed (or, may be folded) to improve portability, and provide visual information through the display 170 arranged on the rear surface of the second housing 120.

The electronic device 1000 may further include a key button 139. The key button 139 may be exposed from a structure (e.g.: an opening) formed on the side surface of the third housing part 130, and may be partially exposed to the outside of the electronic device 1000. The key button 139 may provide a physical input to processing circuitry inside the electronic device 1000 by pressure transmitted from the outside. The key button 139 may not be included in the electronic device 1000, but may be implemented as a different form such as a soft key displayed on the flexible display 140 or the display 170.

The key button 139 may be arranged on the side surface of the third housing part 130 so as to be exposed to the outside in the second state 100b. As the key button 139 is arranged on the side surface of the third housing part 130, it may be arranged in the direction which the side surface of the third housing part 130 is toward. Even if the second state 100b is changed to the first state 100a by the user who views the display 170, the location of the key button 139 arranged on the side surface of the third housing part 130 may not be moved. For example, referring to FIG. 1A, in the first state 100a, when the flexible display 140 is viewed from upward, the key button 139 may be arranged on the right side. Referring to FIG. 1B, in the second state 100b, when the display 170 is viewed from upward, the key button 139 may be arranged on the right side.

The first hinge structure 150 and the second structure 160 may provide a third state 100c of the electronic device 1000. The third state 100c of the electronic device 1000 may be explained as a state wherein the electronic device 1000 is partially closed and partially unfolded (or a single folded state or a half folded state). For example, within the third state 100c, the front surface of the second housing part 120 and the front surface of the third housing part 130 may be toward the same direction, and the front surface of the first housing part 110 and the front surface of the second housing part 120 may be toward opposite directions. For example, within the third state 100c, the first housing part 110 and the second housing part 120 may be closed, and the second housing part 120 and the third housing part 130 may be unfolded. For example, within the third state 100c, the first housing part 110 and the second housing part 120 may constitute an angle of approximately 0 - 10 degrees, and the second housing part 120 and the third housing part 130 may constitute an angle of approximately 180 degrees. Also, within the third state 100c, the electronic device 1000 may provide visual information through a portion of the flexible display 140 (e.g.: the third display area 140c).

The electronic device 1000 may change from the first state 100a to the second state 100b through the third state 100c. The electronic device 1000 may change from the first state 100a which is an unfolded state to the third state 100c which is a partially unfolded state. For example, the electronic device 1000 may change from the first state 100a wherein the first housing part 110, the second housing part 120, and the third housing part 130 are toward the same direction to the third state 100c wherein the front surface of the first housing part 110 is toward the front surface of the second housing part 120. The electronic device 1000 may change from the third state 100c which is a partially unfolded state to the second state 100b which is a closed (or, folded) state. For example, when changed from the third state 100c to the second state 100b, the closed first housing part 110 and second housing part 120 may be arranged on the third housing part 130.

The flexible display 140 may at least partially define the exterior of the electronic device 1000. The flexible display 140 may be partially arranged within the housing structure 101. The flexible display 140 may define the front surface of the electronic device 1000. The flexible display 140 may include a first unbendable portion 141, a second unbendable portion 142, a third unbendable portion 143, a first bendable portion 144, and a second bendable portion 145. The first unbendable portion 141 of the flexible display 140 may be arranged on the front surface of the first housing part 110. The second unbendable portion 142 of the flexible display 140 may be arranged on the front surface of the second housing part 120. The third unbendable portion 143 of the flexible display 140 may be arranged on the front surface of the third housing part 130. The first bendable portion 144 of the flexible display 140 may be arranged between the first unbendable portion 141 and the third unbendable portion 143 of the flexible display 140. For example, the first bendable portion 144 of the flexible display 140 may be arranged on the first hinge structure 150 connecting the first housing part 110 and the second housing part 120. The second bendable portion 145 of the flexible display 140 may be arranged between the second unbendable portion 142 and the third unbendable portion 143 of the flexible display 140. For example, the second bendable portion 145 of the flexible display 140 may be arranged on the second hinge structure 160 connecting the second housing part 120 and the third housing part 130.

The first hinge structure 150 and the second hinge structure 160 may be toward substantially the same direction as the first unbendable portion 141 of the flexible display 140, the second unbendable portion 142 of the flexible display 140, and the third unbendable portion 143 of the flexible display 140. Within the first state 100a, the first bendable portion 144 and the second bendable portion 145 may be arranged on substantially the same horizontal plane as the first unbendable portion 141, the second unbendable portion 142, and the third unbendable portion 143.

The first hinge structure 150 and the second hinge structure 160 may provide the second state 100b of the electronic device 1000. Within the second state 100b, the second unbendable portion 142 of the flexible display 140 may be toward the first unbendable portion 141 of the flexible display 140, and the third unbendable portion 143 of the flexible display 140 may face the rear surface of the first housing part 110.

Within the second state 100b, as the first bendable portion 144 of the flexible display 140 is bent by the first hinge structure 150, the first bendable portion 144 of the flexible display 140 may be folded such that the first unbendable portion 141 of the flexible display 140 and the second unbendable portion 142 of the flexible display 140 are toward different directions.

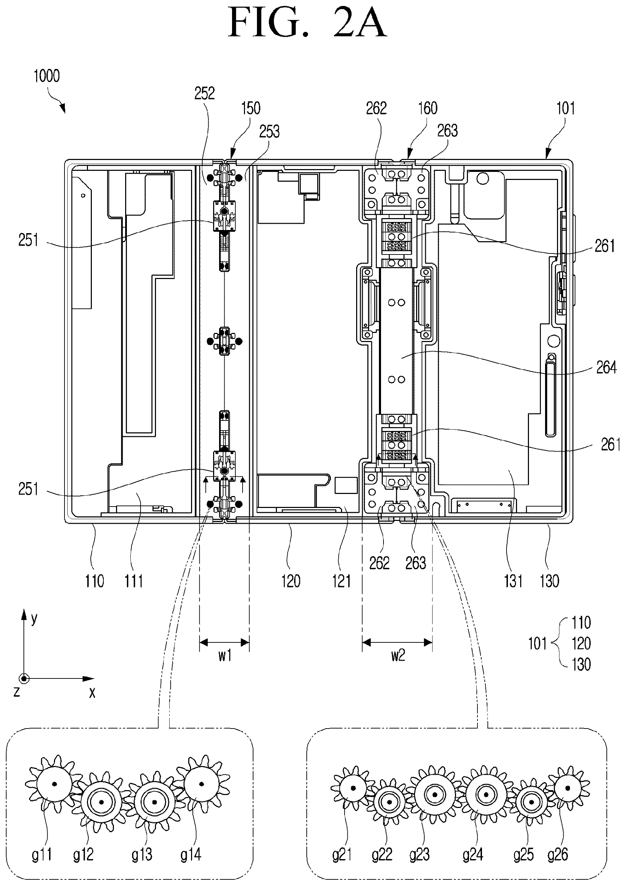

Within the second state 100b, as the second bendable portion 145 of the flexible display 140 is bent by the second hinge structure 160, the second bendable portion 145 of the flexible display 140 may be folded such that the second unbendable portion 142 of the flexible display 140 and the third unbendable portion 143 of the flexible display 140 are toward different directions. The second bendable portion 145 may further include a first modified portion 145a, a second modified portion 145b, and a horizontal plane portion 145c. The first modified portion 145a may be arranged between the horizontal plane portion 145c and the second unbendable portion 142, and the second modified portion 145b may be arranged between the horizontal plane portion 145c and the third unbendable portion 143. The horizontal plane portion 145c may be arranged between the first modified portion 145a and the second modified portion 145b. The horizontal plane portion 145c may be supported by a support plate (e.g.: the support plate 264 in FIG. 2A) distinguished from hinge plates of the second hinge structure 160 (e.g.: the third hinge plate 262 and the fourth hinge plate 263 in FIG. 2A). Regardless of the state of the electronic device 1000, the horizontal plane portion 145c may maintain the horizontal plane. The first modified portion 145a and the second modified portion 145b may be unfolded in the first state 100a and the third state 100c, and in the second state 100b, the first modified portion 145a and the second modified portion 145b may be bent such that the second unbendable portion 142 and the third unbendable portion 143 are toward different directions. Within the second state 100b, the first housing part 110 may be arranged between the second housing part 120 and the third housing part 130. Also, within the second state 100b, the second bendable portion 145 of the flexible display 140 arranged on the second hinge structure 160 may be partially toward the side surface 110c of the first housing part 110.

The first hinge structure 150 and the second hinge structure 160 may provide the third state 100c of the electronic device 1000. Within the third state 100c, the first unbendable portion 141 of the flexible display 140 may be toward the second unbendable portion 142 of the flexible display 140, and the third unbendable portion 143 of the flexible display 140 may be toward the same direction as the second unbendable portion 142 of the flexible display 140. For example, the second unbendable portion 142 and the third unbendable portion 143 may be arranged on substantially the same horizontal plane.

Within the third state 100c, as the first bendable portion 144 of the flexible display 140 is bent by the first hinge structure 150, the first bendable portion 144 of the flexible display 140 may be folded such that the first unbendable portion 141 of the flexible display 140 and the second unbendable portion 142 of the flexible display 140 are toward different directions.

Within the third state 100c, as the second bendable portion 145 of the flexible display 140 is maintained as the unfolded state by the second hinge structure 160, the second bendable portion 145 of the flexible display 140 may be unfolded such that the second unbendable portion 142 of the flexible display 140 and the third unbendable portion 143 of the flexible display 140 are toward the same direction.

The display area of the flexible display 140 may include a first display area 140a, a second display area 140b, and a third display area 140c. The display areas indicate areas that can provide visual information from the flexible display 140. Within the first state 100a, the entire display area of the flexible display 140 may be seen from the front surface of the housing structure 101. For example, within the first state 100a, the first display area 140a, the second display area 140b, and the third display area 140c of the flexible display 140 may be visually exposed. The electronic device 1000 may provide a big display area including the first display area 140a, the second display area 140b, and the third display area 140c to the user.

Within the second state 100b, the display area of the flexible display 140 may not be seen. For example, within the second state 100b, the first display area 140a, the second display area 140b, and the third display area 140c of the flexible display 140 may not be visually exposed.

Within the third state 100c, the display area of the flexible display 140 may be partially seen from the front surface of the third housing part 130. For example, the third display area 140c may be visually exposed, and the first display area 140a and the second display area 140b may not be visually exposed.

As an unlimited example, when the flexible display 140 is used for displaying a screen within the first state 100a of the electronic device 1000, the first display area 140a, the second display area 140b, and the third display area 140c of the flexible display 140 may be activated. Also, as an unlimited example, within the second state 100b, the first display area 140a, the second display area 140b, and the third display area 140c of the flexible display 140 may be inactivated. In addition, as an unlimited example, within the third state 100c of the electronic device 1000, when the flexible display 140 is used for displaying a screen, the third display area 140c may be activated, and the first display area 140a and the second display area 140b of the flexible display 140 may be inactivated.

As an unlimited example, when the flexible display 140 is used for displaying a screen within the first state 100a of the electronic device 1000, the first display area 140a, the second display area 140b, and the third display area 140c of the flexible display 140 may display visual information. Also, as an unlimited example, within the second state 100b, the first display area 140a, the second display area 140b, and the third display area 140c of the flexible display 140 may provide black images. In addition, as an unlimited example, within the third state 100c of the electronic device 1000, when the flexible display 140 is used for displaying a screen, the third display area 140c may provide visual information, and the first display area 140a and the second display area 140b of the flexible display 140 may provide black images.

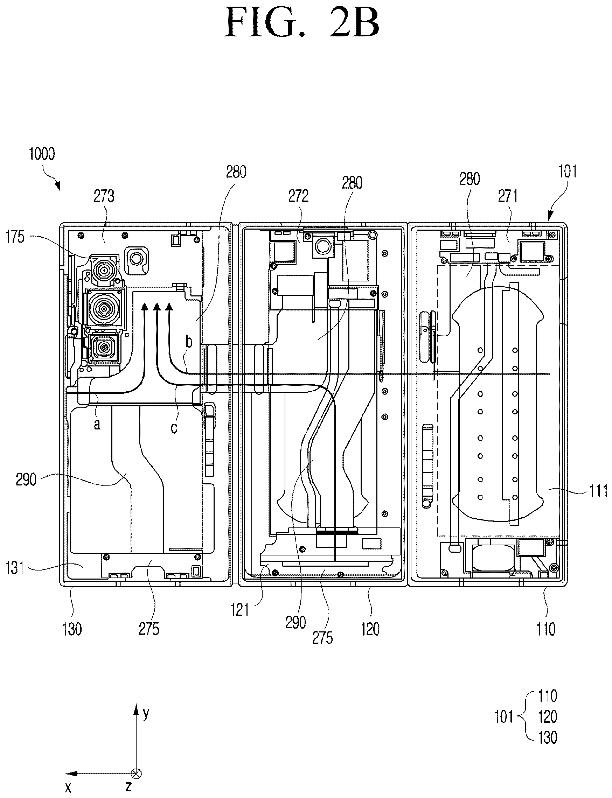

FIG. 2A is a plan view of an electronic device wherein a flexible display has been removed according to an embodiment of the disclosure. FIG. 2B is a rear view of an electronic device wherein a rear cover and a display have been removed according to an embodiment of the disclosure.

Referring to FIG. 2A and FIG. 2B, the electronic device 1000 may include a first hinge structure 150 and a second hinge structure 160. The first width w1 of the first hinge structure 150 may be narrower than the second width w2 of the second hinge structure 160. A difference between the first width w1 of the first hinge structure 150 and the second width w2 of the second hinge structure 160 may be the same as or bigger than the thickness of the first housing part 110. For example, the second hinge structure 160 may have the second width w2 wider than the first width w1, such that the first housing part 110 is arranged between the second housing part 120 and the third housing part 130 according to the second state 100b. The first hinge structure 150 may be referred to as a narrow hinge structure, in the aspect that it has a narrower width than the second hinge structure 160. The second hinge structure 160 may be referred to as a wide hinge structure, in the aspect that it has a wider width than the first hinge structure 150.

The first hinge structure 150 may include a first set 251 of gears, a first hinge plate 252, and a second hinge plate 253. The first hinge plate 252 may be coupled to a first support portion 111 of the first housing part 110. The second hinge plate 253 may be coupled to a second support portion 121 of the second housing part 120. The gears g11, g12, g13, g14 included in the first set 251 of the gears may be constituted to rotate the first hinge plate 252 and the second hinge plate 253. For example, the gears g11, g12, g13, g14 included in the first set 251 of the gears may rotate the second hinge plate 253 (or the second housing part 120) by being interlocked with a rotation of the first hinge plate 252 (or the first housing part 110). After the first hinge plate 252 (or the first housing part 110) is rotated, the gears g11, g12, g13, g14 included in the first set 251 of the gears may be rotated according to the rotation of the first hinge plate 252 (or the first housing part 110). The second hinge plate 253 (or the second housing part 120) may be rotated by being interlocked with the rotation of the first hinge plate 252 according to the rotation of the gears included in the first set 251 of the gears. The gears g11, g12, g13, g14 included in the first set 251 of the gears may include the first gear g11, the second gear g12, the third gear g13, and the fourth gear g14. The first gear g11 may be arranged to be adjacent to the first hinge plate 252, and the fourth gear g14 may be arranged to be adjacent to the second hinge plate 253. The second gear g12 and the third gear g13 may be arranged between the first gear g11 and the fourth gear g14. The first gear g11, the second gear g12, the third gear g13, and the fourth gear g14 may be engaged sequentially. According to a rotation of the first gear g11 in a first rotation direction (e.g.: a clockwise direction), the second gear g12 engaged with the first gear g11 may be rotated in a second rotation direction (e.g.: a counter-clockwise direction) opposite to the first rotation direction. According to the rotation of the second gear g12 in the second rotation direction, the third gear g13 engaged with the second gear g12 may be rotated in the first rotation direction. According to the rotation of the third gear g13 in the first rotation direction, the fourth gear g14 may be rotated in the second rotation direction. As the first gear g11 and the fourth gear g14 rotate in different directions, the first housing part 110 connected to the first hinge plate 252 and the second housing part 120 connected to the second hinge plate 253 may be folded or unfolded.

The second hinge structure 160 may include a second set 261 of gears, a third hinge plate 262, a fourth hinge plate 263, and a support plate 264. The third hinge plate 262 may be coupled to a second support portion 121 of the second housing part 120. The fourth hinge plate 263 may be coupled to a third support portion 131 of the third housing part 130. The gears g21, g22, g23, g24, g25, g26 included in the second set 261 of the gears may be constituted to rotate the third hinge plate 262 and the fourth hinge plate 263. For example, the gears g21, g22, g23, g24, g25, g26 included in the second set 261 of the gears may rotate the fourth hinge plate 263 (or the third housing part 130) by being interlocked with a rotation of the third hinge plate 262 (or the second housing part 120). After the third hinge plate 262 (or the second housing part 120) is rotated, the gears g21, g22, g23, g24, g25, g26 included in the second set 261 of the gears may be rotated according to the rotation of the third hinge plate 262 (or the second housing part 120). The fourth hinge plate 263 (or the third housing part 130) may be rotated by being interlocked with the rotation of the third hinge plate 262 according to the rotation of the gears g21, g22, g23, g24, g25, g26 included in the second set 261 of the gears.

The gears g21, g22, g23, g24, g25, g26 included in the second set 261 of the gears may include the first gear g21, the second gear g22, the third gear g23, the fourth gear g24, the fifth gear g25, and the sixth gear g26. The first gear g21 may be arranged to be adjacent to the third hinge plate 262, and the sixth gear g26 may be arranged to be adjacent to the fourth hinge plate 263. The second gear g22, the third gear g23, the fourth gear g24, and the fifth gear g25 may be arranged between the first gear g21 and the sixth gear g26. The first gear g21, the second gear g22, the third gear g23, the fourth gear g24, the fifth gear g25, and the sixth gear g26 may be engaged sequentially. According to a rotation of the first gear g21 in a first rotation direction (e.g.: a clockwise direction), the second gear g22 engaged with the first gear g21 may be rotated in a second rotation direction (e.g.: a counter-clockwise direction) opposite to the first rotation direction. According to the rotation of the second gear g22 in the second rotation direction, the third gear g23 engaged with the second gear g22 may be rotated in the first rotation direction. According to the rotation of the third gear g23 in the first rotation direction, the fourth gear g24 may be rotated in the second rotation direction. According to the rotation of the fourth gear g24 in the second rotation direction, the fifth gear g25 engaged with the fourth gear g24 may be rotated in the first rotation direction. According to the rotation of the fifth gear g25 in the first rotation direction, the sixth gear g26 engaged with the fifth gear g25 may be rotated in the second rotation direction. As the first gear g21 and the sixth gear g26 rotate in different directions, the second housing part 120 connected to the third hinge plate 262 and the third housing part 130 connected to the fourth hinge plate 263 may be folded or unfolded.

The first hinge structure 150 and the second hinge structure 160 may further include a spiral structure. The spiral structure may include a helical spiral groove formed on each hinge plate or a rotation element connected to a hinge plate, and a moving element that slides along the spiral groove. The hinge plates connected to the hinge structures may be constituted to rotate in each displacement that is substantially the same through the spiral structure.

The electronic device 1000 may include a first printed circuit board 271, a second printed circuit board 272, and a third printed circuit board 273.

The first printed circuit board 271 may be arranged on the first support portion 111 of the first housing part 110. Hardware components inside the first housing part 110 may be mounted on the first printed circuit board 271. The second printed circuit board 272 may be arranged on the second support portion 121 of the second housing part 120. The third printed circuit board 273 may be arranged on the third support portion 131 of the third housing part 130. Hardware components inside the third housing part 130 may be mounted on the third printed circuit board 273.

The hardware components arranged in the first printed circuit board 271 may support the hardware components arranged in the second printed circuit board 272 and/or the hardware components arranged in the third printed circuit board 273, or operate independently from them.

The hardware components arranged in the second printed circuit board 272 may support the hardware components arranged in the first printed circuit board 271 or the hardware components arranged in the third printed circuit board 273, or operate independently from them. The hardware components arranged in the second printed circuit board 272 may include a speaker, a front surface camera, and/or display driving circuitry.

The hardware components arranged in the third printed circuit board 273 may include at least one processor including processing circuitry (e.g.: an application processor (AP), a communication processor (CP)), memory including at least one storage medium, communication circuitry, and a rear surface camera 175. The rear surface camera 175 may be exposed through a structure (e.g.: an opening) on the rear surface of the third housing part 130.

The electronic device 1000 may further include a sub printed circuit board 275, and flexible printed circuit boards 280, 290. The sub printed circuit board 275 may be arranged in at least some of the first housing part 110, the second housing part 120, or the third housing part 130. The flexible printed circuit boards 280, 290 may include the first flexible printed circuit board 280 and the second flexible printed circuit board 290. The first flexible printed circuit board 280 may electrically connect the printed circuit boards arranged in each of the housing parts 110, 120, 130. The second flexible printed circuit board 290 may connect the printed circuit board (e.g.: the first printed circuit board 271, the second printed circuit board 272, or the third printed circuit board 273) inside the housing part wherein the sub printed circuit board 275 is arranged and the sub printed circuit board 275 by the second flexible printed circuit board 290.

The components inside the electronic device 1000 may be connected with the at least one processor inside the third printed circuit board 273 through the flexible printed circuit boards 280, 290. For example, a signal received from an antenna arranged in the third housing part 130 may be transmitted to the third printed circuit board 273 wherein the at least one processor (e.g.: an AP or a CP) is arranged through a signal route a provided by the first flexible printed circuit board 280. The driving circuitry for the flexible display 140 arranged inside the first housing part 110 may be connected to the third printed circuit board 273 wherein the at least one processor (e.g.: an AP) is arranged through a signal route b provided by the sub printed circuit board 275 and the first flexible printed circuit board 280. The driving circuitry for the display 170 connected with the sub printed circuit board 275 arranged in the second housing part 130 may be electrically connected to the third printed circuit board 273 wherein the at least one processor (e.g.: an AP) is arranged through a signal route c provided by the sub printed circuit board 275, the first flexible printed circuit board 280, and the second flexible printed circuit board 290.

The electronic device 1000 may further include batteries. Each of the batteries may be attached to the support portions 111, 121, 131 included in the housing parts 110, 120, 130. The support portions 111, 121, 131 may support rechargeable batteries.

The arrangement of the hardware components is an exemplary one, and unlike what is described above, the rear surface camera 175 and the third printed circuit board 273 may be arranged in the second housing part 120, and the second printed circuit board 272 may be arranged in the third housing part 130.

It was described that the first housing part 110 and the third housing part 130 rotate in an opposite direction to the second housing part 120, but the disclosure is not limited thereto. For example, while changing from the first state 100a to the second state 100b, the first housing part 110 may rotate in a counter-clockwise direction with respect to the second housing part 120, and the third housing part 130 may rotate in a counter-clockwise direction with respect to the second housing part 120. As the first housing part 110 and the third housing part 130 rotate in the same direction, a portion of the display area of the flexible display 140 may be visually exposed within the second state.

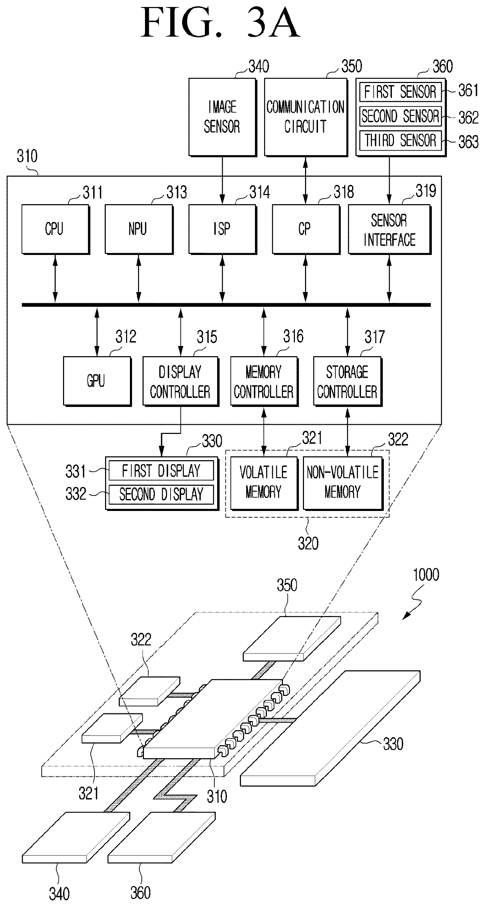

FIG. 3A is a block diagram of an exemplary electronic device that can perform operations explained in the disclosure.

Referring to FIG. 3A, the electronic device 1000 may be an electronic device such as a foldable type smartphone. For example, the electronic device 1000 may be a foldable type device that can provide a folded state, a half folded state, and an unfolded state by using the two hinge structures 150, 160. Such a device may also be referred to as a multi foldable device or a multi folding device, etc. Meanwhile, the components illustrated in FIG. 3A, their relation, and their functions are merely exemplary ones, and do not limit implementations explained or claimed in the disclosure. The electronic device 1000 may also be referred to as a mobile device, a user device, a multifunctional device, or a portable device.

The electronic device 1000 may include components including at least one processor 310 (referred to as the processor 310 hereinafter), at least one memory 320 (referred to as the memory 320 hereinafter), at least one display 330 (referred to as the display 330 hereinafter), at least one image sensor 340 (referred to as the image sensor 340 hereinafter), at least one communication circuit 350 (referred to as the communication circuit 350 hereinafter), and/or at least one sensor 360 (referred to as the sensor 360 hereinafter).

The components illustrated in FIG. 3A are merely exemplary ones. Also, the type and/or the number of the hardware included in the electronic device 1000 are not limited to what is illustrated in FIG. 3A. For example, the electronic device 1000 may include other components (e.g.: power management integrated circuitry (PMIC), audio processing circuitry, an antenna, a rechargeable battery, or an input/output interface). For example, some components may be omitted from the electronic device 1000. For example, some components may be integrated into one component.

The electronic device 1000 may be implemented as one or more integrated circuit (or circuitry) (IC) chips, and may execute various types of data processing. The electronic device 1000 may include at least one electric circuit, and perform distributed processing of instructions (or programs, data, others) stored in the memory 320 individually or collectively. The electronic device 1000 may include a processor assembly including one or more processing circuits. The electronic device 1000 may include any operative processing circuit for controlling the performance and the operations of one or more components of the electronic device 1000 (e.g.: the memory 320, the display 330, the image sensor 340, the communication circuit 350, and/or the sensor 360). For example, the processor 310 (e.g.: an AP) may be implemented as a system on chip (SoC) (e.g., one chip or chipset). For example, the electronic device 1000 may be implemented as a plurality of cores (or at least one core circuit), a plurality of chips, or a plurality of chipsets. For example, the electronic device 1000 may include one or more processing circuits. For example, the electronic device 1000 may include one or more processing circuits constituted to perform several functions of the disclosure individually and/or collectively. As an unlimited example, at least a portion of the processor 310 may be included in a first chip of the electronic device 1000, and at least another portion of the processor 310 may be included in a second chip of the electronic device 1000 different from the first chip of the electronic device 1000.

For example, the electronic device 1000 may include a central processing unit (CPU) 311, a graphics processing unit (GPU) 312, a neural processing unit (NPU) 313, an image signal processor (ISP) 314, a display controller 315, a memory controller 316, a storage controller 317, a communication processor (CP) 318, and/or a sensor interface 319. These components of the processor 310 are merely exemplary ones. For example, the electronic device 1000 may further include other components. For example, some components of the processor 310 may be omitted from the processor 310. For example, some components of the processor 310 may be included as separate components of the electronic device 1000 outside the processor 310. For example, some components of the processor 310 (e.g.: the memory controller 316) may be included in the other components (e.g.: at least a portion of the memory 320, the interface (e.g.: can be used to connect to the at least one component of the electronic device 1000), the display 330, and/or the image sensor 340).

The electronic device 1000 may cause the other components of the electronic device 1000 to perform various operations by executing the instructions stored in the memory 320.

The CPU 311 (or a central processing circuit) may be constituted to control the components of the processor 310 based on execution of instructions stored in the memory 320 (e.g.: volatile memory 321 and/or non-volatile memory 322). The GPU 312 (or a graphic processing circuit) may be constituted to execute parallel operations (e.g.: rendering). The NPU 313 (or a neural processing circuit, or an artificial intelligence (AI) chip) may be constituted to execute operations for an artificial intelligence model (e.g.: convolution computations). The IPS 314 (or an image signal processing circuit) may be constituted to process a raw image obtained through the image sensor 340 in a format appropriate for the components inside the electronic device 1000 or the components of the processor 310. The display controller 315 (or a display control circuit, or a display processing unit (DPU)) may be constituted to process an image obtained from the CPU 311, the GPU 312, the ISP 314, or the memory 320 (e.g.: the volatile memory 321) in a format appropriate for the display 330. The memory controller 316 (or a memory control circuit) may be constituted to control reading of data from the volatile memory 321 and recording of the data in the volatile memory 321. The storage controller 317 (or a storage control circuit) may be constituted to control reading of data from the non-volatile memory 322 and recording of the data in the non-volatile memory 322. The CP 318 (or a communication processing circuit) may be constituted to process data obtained from the components of the processor 310 in a format appropriate for being transmitted to another electronic device through the communication circuit 350, or process data obtained from another electronic device through the communication circuit 350 in a format appropriate for processing the components of the processor 310. For example, the communication circuit 350 may include one or more communication circuits. The sensor interface 319 (or a sensing data processing circuit, a sensor hub) may be constituted to process data regarding the state of the electronic device 1000 and/or the state of the surroundings of the electronic device 1000 obtained through the sensor 360 in a format appropriate for the components of the processor 310.

The memory 320 may include one or more storage media (or one or more storage devices). For example, the memory 320 may include a memory assembly including one or more storage media. For example, the one or more storage media may include permanent memory (e.g., the non-volatile memory 322) such as a hard drive, flash memory, and read-only memory (ROM), semi-permanent memory (e.g., the volatile memory 321) such as random access memory (RAM), a storage (or a storage assembly) of any other suitable type, or any combination thereof. The memory 320 may include cache memory which is memory of one or more different types that is used for temporarily storing data for the functions or the features of the electronic device 1000. As an unlimited example, the cache memory may be included inside the processor 310. The memory 320 may be fixedly embedded in the electronic device 1000, or incorporated into one or more suitable types of components (e.g.: a subscriber identity module (SIM) card and/or a secure digital (SD) card) that can be repeatedly inserted into the electronic device 1000 and can be removed from the electronic device 1000.

For example, the memory 320 may store one or more software applications such as an operating system (or a system) software application, a firmware software application, a driver software application, a plug-in (e.g., an add-in, an add-on, and/or an applet) software application, and/or any other suitable software application. For example, the one or more software applications may include instructions that can be executed by the processor 310. For example, the memory 320 may store instructions that can be called by an application programming interface (API). For example, the memory 320 may store instructions within a library.

The display 330 may be controlled by the processor 310, and output visualized information to the user. According to an embodiment, the display 330 may include a touch sensor constituted to detect touches, or a pressure sensor constituted to measure the strength of force generated by a touch.

The display 330 may include a first display 331 and a second display 332. The first display 331 may include a flexible display 140 that has a characteristic of being able to be bent or warped. For example, the flexible display 140 may be implemented as organic LEDs (OLEDs) or electronic paper, etc. The second display 332 may include a flat panel display (FPD). The FPD may include a liquid crystal display, a plasma display panel (PDP), and/or at least one LED (light emitting diode). The LEDs may include organic LEDs (OLEDs).

The first display 331 may cut across the first hinge structure 150 and the second hinge structure 160, and may be arranged on one surface of each of the first housing part 110, the second housing part 120, and the third housing part 130. For example, the first display 331 in FIG. 3A may include the flexible display 140 in FIG. 1A to FIG. 1C.

The second display 332 may be arranged on the other surface of the second housing part 120. For example, the second display 332 in FIG. 3A may include the display 170 in FIG. 1A to FIG. 1C.

The communication circuit 350 may include hardware components for supporting transmission and/or reception of electric signals between the electronic device 1000 and an external electronic device (e.g.: a server device, another electronic device, etc.). For example, the communication circuit 350 may include at least one of a modem, an antenna, or an optic/electronic (O/E) converter. The communication circuit 350 may support transmission and/or reception of electric signals based on various types of protocols such as Ethernet, a local area network (LAN), a wide area network (WAN), wireless fidelity (Wi-Fi), Bluetooth, Bluetooth Low energy (BLE), Zigbee, Long Term Evolution (LTE), 5G new radio (NR), and/or 6G.

The sensor 360 may generate electric information that can be processed by the processor 310 and/or the memory 320 from non-electric information related to the electronic device 1000. The information may be referred to as sensor data. For example, the sensor 360 may detect an operational state or an external environmental state of the electronic device 1000, and generate electric information corresponding to the detected state. For example, the sensor 360 may include a global positioning system (GPS) sensor, an illumination sensor, and/or a time-of-flight (ToF) sensor.

The sensor 360 may include at least one first sensor 361 (referred to as a first sensor 361 hereinafter) and at least one second sensor 362 (referred to as a second sensor 362 hereinafter) for detecting the state of the electronic device 1000. For example, the state of the electronic device 1000 may include a closed state (or a folded state) and/or an unfolded state of the housing parts 110, 120, 130, or a folding angle among the housing parts 110, 120, 130.

According to an embodiment, the sensor 360 may include at least one third sensor 363 (referred to as a third sensor 363 hereinafter). For example, the third sensor 363 may include a gyro sensor. According to an embodiment, the gyro sensor may include a three-axis gyro sensor, and include at least three gyros for detecting rotation angles for each of the X, Y, and Z axes, and at least three acceleration sensors for detecting acceleration for each of the X, Y, and Z axes.

According to an embodiment, the third sensor 363 may detect a rotation of the electronic device 1000. For example, the third sensor 363 may detect angular velocity based on the Coriolis force generated when the electronic device 1000 rotates, and detect a rotation angle, or a tilt of the rotating electronic device 1000.

However, the disclosure is not limited thereto, and the sensor 360 may include an accelerometer, a magnetometer, or an optical sensor. For example, the accelerometer may detect a tilt of the rotating electronic device 1000, and the magnetometer may detect a change of a direction (or, an orientation) of the rotating electronic device 1000 by using a magnetic field, and the optical sensor may detect a movement (e.g.: a rotation angle, or a tilt) of the electronic device 1000 based on a change of the ambient environment of the rotating electronic device 1000.

According to an embodiment, the electronic device 1000 may identify a display mode of the electronic device 1000 based on a rotation angle, a tilt, a change of a direction, etc. detected through the sensor 360.

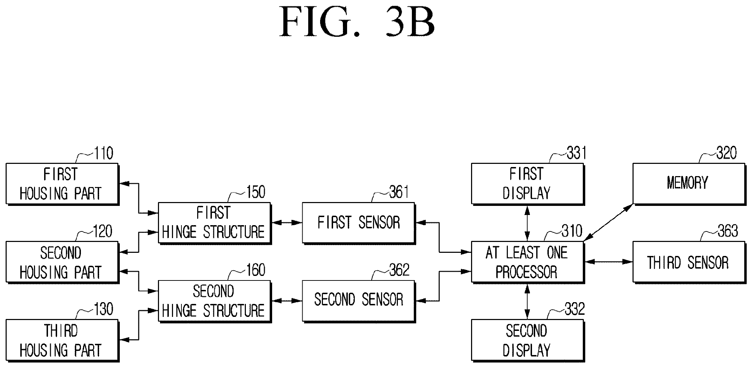

FIG. 3B is a block diagram of an exemplary electronic device that can perform operations explained in the disclosure.

In the explanation regarding FIG. 3B, explanation overlapping with FIG. 3A will be omitted.

According to an embodiment, the electronic device 1000 may perform operations of the electronic device 1000 by executing the at least one instruction stored in the memory.

According to an embodiment, the electronic device 1000 may be implemented as a digital signal processor (DSP) processing digital signals, a microprocessor, and a timing controller (TCON). However, the disclosure is not limited thereto, and the electronic device 1000 may include one or more of a central processing unit (CPU), a micro controller unit (MCU), a micro processing unit (MPU), a controller, an application processor (AP) or a communication processor (CP), an ARM processor, and an artificial intelligence (AI) processor, or may be defined by the terms. Also, the electronic device 1000 may be implemented as a system on chip (SoC) having a processing algorithm stored therein or large scale integration (LSI), or in the form of a field programmable gate array (FPGA). The electronic device 1000 may perform various functions by executing computer executable instructions stored in the memory 320.

The electronic device 1000 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The electronic device 1000 may control one or a random combination of the other components of the electronic device, and perform an operation related to communication or data processing. Also, the electronic device 1000 may execute one or more programs or instructions stored in the memory 320. For example, the electronic device 1000 may perform the method according to an embodiment of the disclosure by executing the at least one instruction stored in the memory 320.

In case the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The electronic device 1000 may be implemented as a single core processor including one core, or may be implemented as one or more multicore processors including a plurality of cores (e.g., multicores of the same kind or multicores of different kinds). In case the processor 310 is implemented as multicore processors, each of the plurality of cores included in the multicore processors may include internal memory of the processor such as cache memory, on-chip memory, etc., and a common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be performed by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, but the embodiments of the disclosure are not limited thereto.

According to an embodiment, the electronic device 1000 may control at least one of the first display 331 or the second display 332 to display a UI for setting the display mode of the electronic device 1000.

According to an embodiment, if a user input for setting the display mode of the electronic device 1000 to a horizontal mode is received through the UI displayed by the first display 331, the electronic device 1000 may fix the display mode of the electronic device 1000 to the horizontal mode.

According to an embodiment, the electronic device 1000 may display at least one application according to the horizontal mode regardless of a rotation of the electronic device 1000. For example, the electronic device 1000 may display one application based on an aspect ratio of the first display 331 in the horizontal mode of the electronic device 1000, or display a plurality of applications in areas divided based on a boundary parallel to a short side surface of the electronic device 1000 (or, a boundary perpendicular to a long side surface) in, as defined herein, a multi-windows mode.

According to an embodiment, if a user input for setting the display mode of the electronic device 1000 to a vertical mode is received through the UI displayed by the first display 331, the electronic device 1000 may fix the display mode of the electronic device 1000 to the vertical mode.

According to an embodiment, the electronic device 1000 may display at least one application according to the vertical mode regardless of a rotation of the electronic device 1000. For example, the electronic device 1000 may display one application based on an aspect ratio of the first display 331 in the vertical mode of the electronic device 1000, or display a plurality of applications in areas divided based on a boundary parallel to a long side surface of the electronic device 1000 (or, a boundary parallel to a short side surface) in the multi-windows mode.

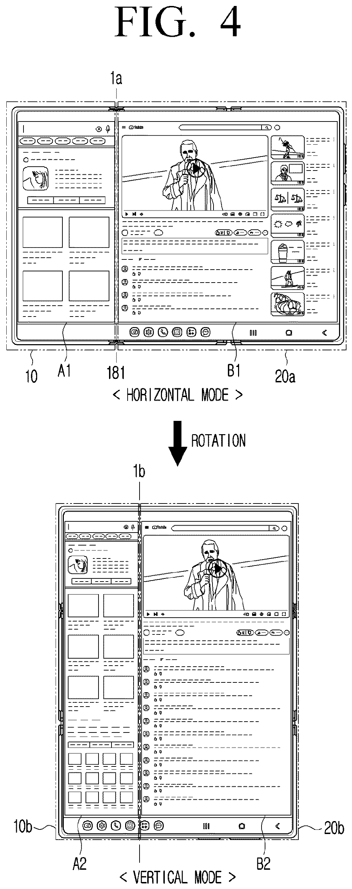

According to an embodiment, if a user input for setting the display mode of the electronic device 1000 to an automatic rotation mode is received through the UI displayed by the first display 331, the electronic device 1000 may change the display mode of the electronic device 1000 to the horizontal mode, or change it to the vertical mode according to a rotation of the electronic device 1000. Detailed explanation in this regard will be described with reference to FIG. 4.

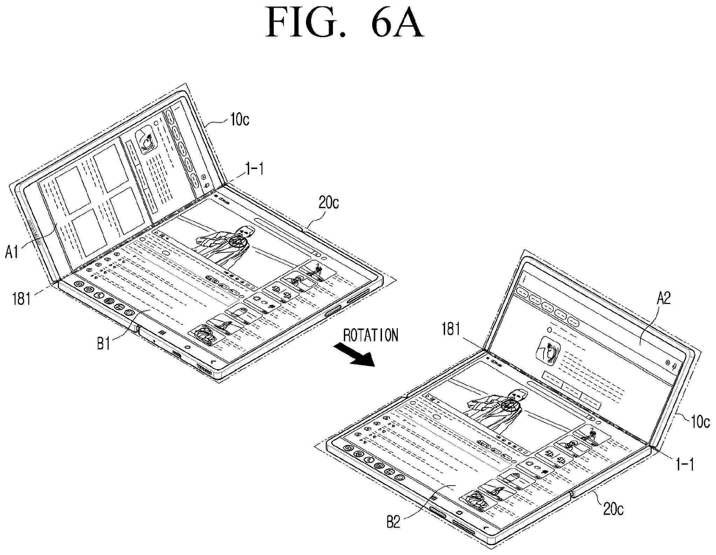

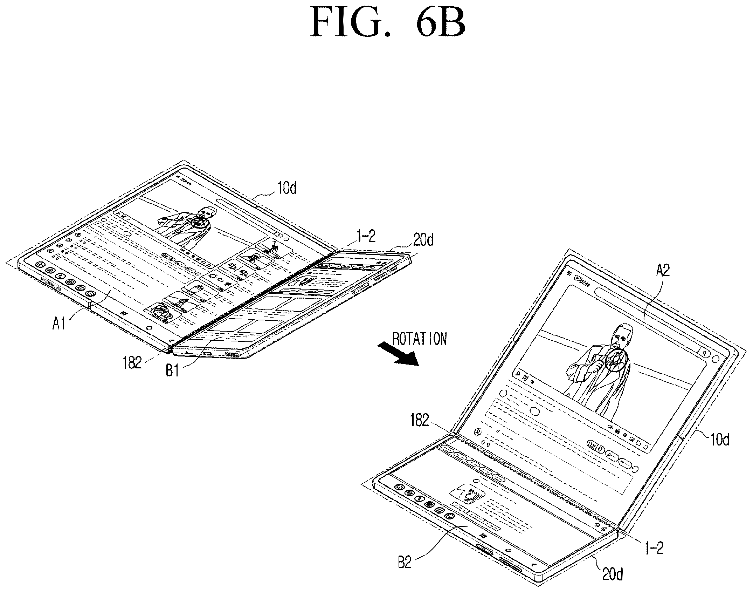

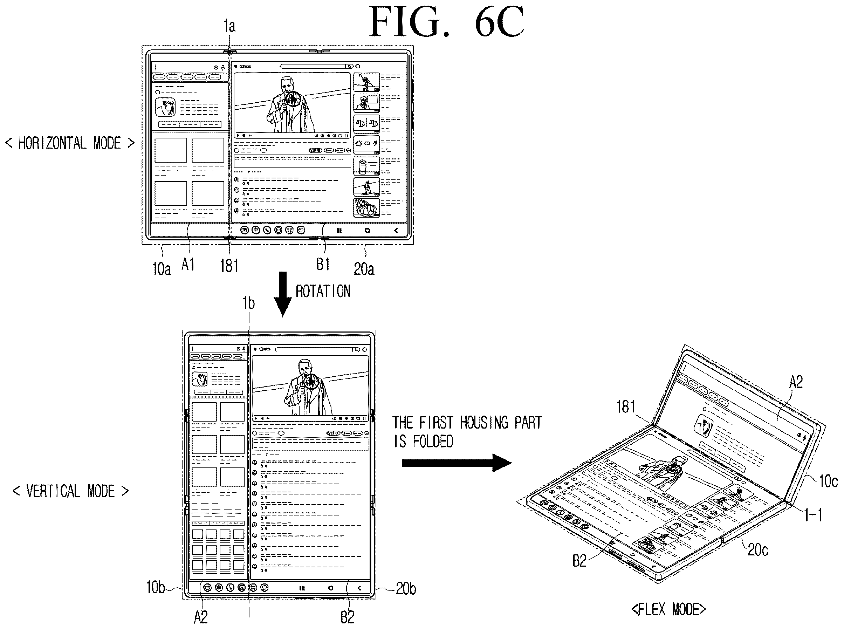

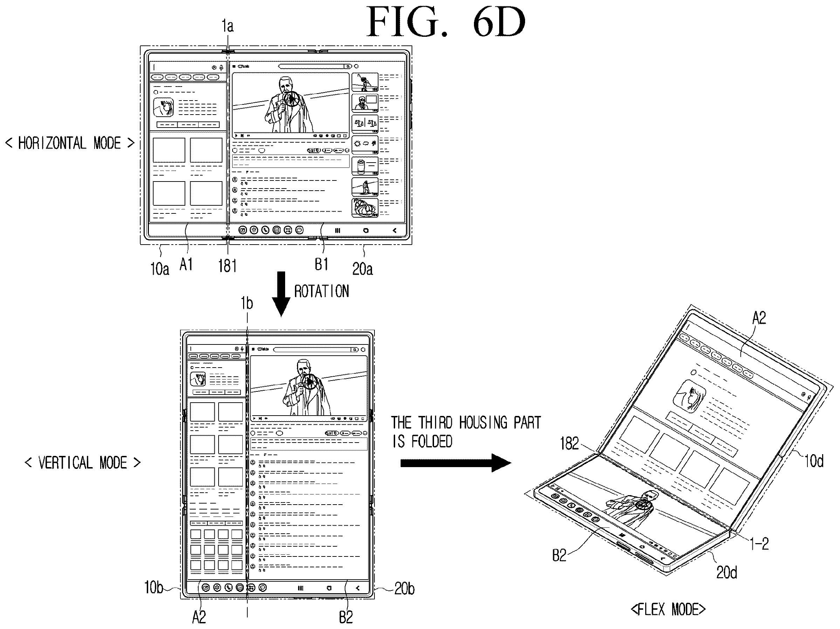

According to an embodiment, if the electronic device 1000 rotates in the automatic rotation mode of the electronic device 1000, the electronic device 1000 may be changed to any one of the horizontal mode or the vertical mode, and if at least one of the first housing part 110 or the third housing part 130 is identified to be in a partially folded state in the multi-windows mode, the electronic device 1000 may display a plurality of applications in areas divided based on a boundary due to the partially folded state. Detailed explanation in this regard will be described with reference to FIG. 6.

However, the disclosure is not limited thereto, and according to an embodiment, the electronic device 1000 may provide a mode wherein the boundary in the multi-windows mode is fixed, and applications are rotated within areas divided based on the boundary in addition to the horizontal mode, the vertical mode, and the automatic rotation mode.

FIG. 4 is a diagram for illustrating a display mode of an electronic device providing a plurality of applications according to an embodiment of the disclosure.

Referring to FIG. 4, the electronic device 1000 may provide a plurality of applications through a screen on the first display 331.

For example, the electronic device 1000 may divide a screen into a plurality of areas, and locate different applications in each of the plurality of areas, and provide the plurality of applications simultaneously.

For example, in the multi-windows mode, the electronic device 1000 may divide a screen into a first area 10a and a second area 20a, and display the first application A1 in the first area 10a, and display the second application B1 in the second area 20a.

According to an embodiment, the electronic device 1000 may divide the first display 331 into the first area 10a and the second area 20a based on the boundary 1a, and the boundary 1a may correspond to a first folding axis 181 as illustrated in FIG. 4, but the disclosure is obviously not limited thereto. The first folding axis 181 illustrated in FIG. 4 may correspond to the central axis of the first hinge structure 150 that rotatably couples the first housing part 110 and the second housing part 120.

For example, the electronic device 1000 may divide the first display 331 into the first area 10a and the second area 20a based on the boundary 1a, and the boundary 1a may correspond to a second folding axis 182 illustrated in FIG. 1A. For example, the second folding axis 182 may correspond to the central axis of the second hinge structure 160 that rotatably couples the second housing part 120 and the third housing part 130.

However, the disclosure is not limited thereto, and the boundary 1a may be changed variously within the screen according to the user's setting on the first display 331. For example, the boundary 1a according to the user's setting may divide the screen into the first area 10a and the second area 20a, and the area ratio of the first area 10a and the second area 20a may be 1:1.

According to an embodiment, the electronic device 1000 may display the first application A1 in the first area 10a located on the left side, and display the second application B1 in the second area 20a located on the right side.

According to an embodiment, the electronic device 1000 may identify the display mode of the electronic device 1000 based on a rotation angle or a tilt detected through the third sensor 363. For example, the display mode of the electronic device 1000 may include a vertical mode (a portrait mode) and a horizontal mode (a landscape mode). For example, in the vertical mode, the height of the screen may be longer than the width, and in the horizontal mode, the width of the screen may be longer than the height.

For example, if the display mode of the electronic device 1000 is the vertical mode, the short side surface of the electronic device 1000 may correspond to the width of the screen, and the long side surface of the electronic device 1000 may correspond to the height of the screen. Also, if the display mode of the electronic device 1000 is the horizontal mode, the long side surface of the electronic device 1000 may correspond to the width of the screen, and the short side surface of the electronic device 1000 may correspond to the height of the screen.

If the display mode of the electronic device 1000 is changed from the horizontal mode to the vertical mode through the third sensor 363 according to a rotation of the electronic device 1000, the electronic device 1000 may rotate each of the boundary 1a, the first application A1, and the second application B1.

For example, the electronic device 1000 may display the rotated first application A2 and the rotated second application B2 in each of the first area 10b and the second area 20b divided based on the rotated boundary 1b.

For example, if the electronic device 1000 is changed from the horizontal mode to the vertical mode according to a rotation of the electronic device 1000, the electronic device 1000 may locate the rotated boundary 1b on the first display 331 in the vertical mode of the electronic device 1000, such that the ratio of the width of the first area 10 and the width of the second area 20 to the width of the electronic device 1000 (the long side surface of the electronic device 1000) in the horizontal mode of the electronic device 1000 is also maintained in the vertical mode.

According to an embodiment, even if the display mode (or, the direction of the screen) of the electronic device 1000 is changed, the electronic device 1000 may locate the rotated boundary 1b on the first display 331, such that the ratio between the first area 10b and the second area 20b in the display mode after the change (e.g.: the vertical mode) corresponds to the ratio between the first area 10a and the second area 20a in the display mode before the change (e.g.: the horizontal mode).

However, the disclosure is not limited thereto, and the electronic device 1000 may divide the screen into the first area 10a and the second area 20a based on the boundary 1a corresponding to the horizontal mode in the horizontal mode of the electronic device 1000. Also, the electronic device 1000 may divide the screen into the first area 10b and the second area 20b based on the boundary 1b corresponding to the vertical mode in the vertical mode of the electronic device 1000, and the ratio between the first area 10a and the second area 20a in the horizontal mode may be different from the ratio between the first area 10b and the second area 20b in the vertical mode.

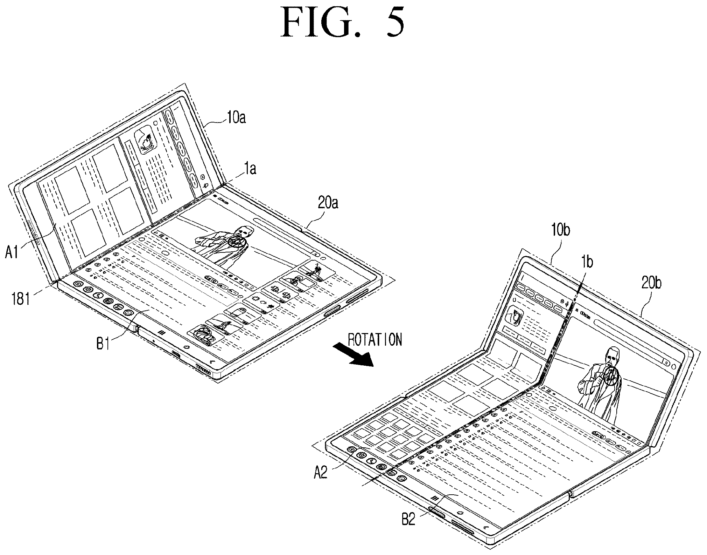

FIG. 5 is a diagram for illustrating an electronic device providing a plurality of applications in a partially folded state according to an embodiment of the disclosure.

Referring to FIG. 5, according to an embodiment, other than a state wherein the electronic device 1000 is unfolded (or, an unfolded state), a state wherein the electronic device 1000 is closed (or, a folded state (e.g.: a completely folded state) or a multi-folded state), and a state wherein the electronic device 1000 is partially closed and partially unfolded (or, a single folded state or a half folded state), the electronic device 1000 may include a state wherein any one of the first housing part 110 or the third housing part 130 is partially folded (or, a partially unfolded state or a partially closed state or a flex state).

A state wherein any one of the first housing part 110 or the third housing part 130 is partially folded may be explained as a folding angle between the housing parts (e.g.: the first housing part 110 to the third housing part 130). According to an embodiment, a folding angle may be referred to as an angle of a folding axis, or a hinge angle, but hereinafter, it will be generally referred to as a folding angle for the convenience of explanation.

For example, the first folding angle may include an angle between the first housing part 110 and the second housing part 120 (e.g.: θ1) based on a folding axis (e.g.: 181 in FIG. 1A), and the second folding angle may include an angle between the second housing part 120 and the third housing part 130 (e.g.: θ2) based on a folding axis (e.g.: 182 in FIG. 1A).

The first sensor 361 may be constituted to detect the first folding angle between the first housing part 110 and the second housing part 120 by control by the processor 310. The second sensor 362 may be constituted to detect the second folding angle between the second housing part 120 and the third housing part 130 by control by the processor 310.

For example, the first sensor 361 may include a hall sensor and/or at least one six-axis sensor. The second sensor 362 may include a hall sensor and/or at least one six-axis sensor. In each of the first housing part 110, the second housing part 120, and the third housing part 130, a six-axis sensor may be provided. The at least one six-axis sensor of the first sensor 361 may include the six-axis sensors provided in the first housing part 110 and the second housing part 120. The at least one six-axis sensor of the second sensor 362 may include the six-axis sensors provided in the second housing part 120 and the third housing part 130.

The hall sensor may generate an electric signal (e.g.: a voltage) in response to a magnetic field. If the strength of the magnetic field is strong, the hall sensor may generate an electric signal of relatively big strength, and if the strength of the magnetic field is weak, the hall sensor may generate an electric signal of relatively weak strength.

For example, the hall sensor may be located around the first hinge structure 150. According to an embodiment, the hall sensor may be located in the first housing part 110, and a magnetic body may be located in the second housing part 120. Also, according to an embodiment, the hall sensor may be located in the second housing part 120, and a magnetic body may be located in the first housing part 110. The electronic device 1000 may detect the state of the first housing part 110 and the second housing part 120 based on sensor data received from the hall sensor. For example, if the first housing part 110 and the second housing part 120 are changed from an unfolded state to a closed state, or changed from a folded state to an unfolded state, the hall sensor may generate an electric signal in response to the magnetic field of the magnetic body. The electronic device 1000 may identify whether the first housing part 110 and the second housing part 120 are in an unfolded state, or a closed state, or a partially folded state by using the strength of the electric signal received from the hall sensor.

For example, the hall sensor may be located around the second hinge structure 160. According to an embodiment, the hall sensor may be located in the second housing part 120, and a magnetic body may be located in the third housing part 130. Also, according to an embodiment, the hall sensor may be located in the third housing part 130, and a magnetic body may be located in the second housing part 120. The electronic device 1000 may detect the state of the second housing part 120 and the third housing part 130 based on sensor data received from the hall sensor. For example, if the second housing part 120 and the third housing part 130 are changed from an unfolded state to a folded state, or changed from a folded state to an unfolded state, the hall sensor may generate an electric signal in response to the magnetic field of the magnetic body. The electronic device 1000 may identify whether the second housing part 120 and the third housing part 130 are in an unfolded state, or a closed state, or a partially folded state by using the electric signal received from the hall sensor.

The six-axis sensor may include an acceleration sensor (e.g.: a three-axis acceleration sensor) and a gyro sensor (e.g.: a three-axis gyro sensor). The acceleration sensor may generate sensor data indicating the direction and/or the size of acceleration applied to the electronic device 1000 by using a plurality of axes (e.g.: an x axis, a y axis, a z axis) perpendicular to each other. The gyro sensor may generate sensor data indicating angular velocity of the electronic device 1000 regarding the plurality of axes. The six-axis sensor may be respectively provided in the first housing part 110, the second housing part 120, and the third housing part 130. The electronic device 1000 may identify tilts and/or rotations of the first housing part 110 and the second housing part 120 by using the sensor data received from the six-axis sensors respectively provided in the first housing part 110 and the second housing part 120, and identify a first folding angle between the first housing part 110 and the second housing part 120. The electronic device 1000 may identify tilts and/or rotations of the second housing part 120 and the third housing part 130 by using the sensor data received from the six-axis sensors respectively provided in the second housing part 120 and the third housing part 130, and identify a second folding angle between the second housing part 120 and the third housing part 130.

According to an embodiment, the electronic device 1000 may identify the state of the electronic device 1000 based on the state of the housing parts 110, 120, 130.

For example, the electronic device 1000 may identify that the electronic device 1000 is in a second state (e.g.: 100b in FIG. 1B) based on the fact that the first folding angle between the first housing part 110 and the second housing part 120 and the second folding angle between the second housing part 120 and the third housing part 130 were identified as a first designated angle (e.g.: approximately 0 degree - 10 degrees). In the second state (e.g.: 100b in FIG. 1B), the first housing part 110, the second housing part 120, and the third housing part 130 may be closed (or, folded).

For example, the electronic device 1000 may identify that the electronic device 1000 is in a first state (e.g.: 100a in FIG. 1A) based on the fact that the first folding angle between the first housing part 110 and the second housing part 120 and the second folding angle between the second housing part 120 and the third housing part 130 were identified as a second designated angle (e.g.: approximately 180 degrees). In the first state (e.g.: 100a in FIG. 1A), the first housing part 110, the second housing part 120, and the third housing part 130 may be unfolded.

For example, the electronic device 1000 may identify that the electronic device 1000 is in a third state (e.g.: 100c in FIG. 1C) based on the fact that the folding angle between the first housing part 110 and the second housing part 120 is the first designated angle (e.g.: approximately 0 degree - 10 degrees), and the folding angle between the second housing part 120 and the third housing part 130 is the second designated angle (e.g.: approximately 180 degrees). In the third state (e.g.: 100c in FIG. 1C), the first housing part 110 and the second housing part 120 may be closed (or, folded), and the second housing part 120 and the third housing part 130 may be unfolded.

As described above, the first state (e.g.: 100a in FIG. 1A) of the electronic device 1000 includes an unfolded state, the second state (e.g.: 100b in FIG. 1B) includes a folded state, and the third state (e.g.:100c in FIG. 1C) includes a half folded state.

Also, as illustrated in FIG. 5, the electronic device 1000 may identify whether any one of the first housing part 110 or the third housing part 130 is in a partially folded state based on the first folding angle and the second folding angle.

For example, if the first folding angle between the first housing part 110 and the second housing part 120 is identified to be between the first designated angle (e.g.: approximately 0 degree - 10 degrees) and the second designated angle (e.g.: approximately 180 degrees) (e.g.: approximately 30 degrees - 115 degrees), the electronic device 1000 may identify that the first housing part 110 is in a partially folded state.

For example, if the second folding angle between the second housing part 120 and the third housing part 130 is identified to be between the first designated angle (e.g.: approximately 0 degree - 10 degrees) and the second designated angle (e.g.: approximately 180 degrees) (e.g.: approximately 30 degrees - 115 degrees), the electronic device 1000 may identify that the third housing part 130 (or, the second housing part 120) is in a partially folded state.

Hereinafter, for the convenience of explanation, explanation will be described by assuming a state wherein the first housing part 110 is in a partially folded state, and the various embodiments of the disclosure may include a state wherein the third housing part 130 is in a partially folded state and/or a state wherein each of the first housing part 110 and the third housing part 130 is in a partially folded state, other than a state wherein the first housing part 110 is in a partially folded state.

According to an embodiment, if the first housing part 110 is identified to be in a partially folded state, the electronic device 1000 may display the first application A1 in the first area 10a, and display the second application B1 in the second area 20a divided based on the boundary 1a due to the partially folded state. For example, the boundary 1a due to the partially folded state of the first housing part 110 may correspond to the central axis of the first hinge structure 150, i.e., the first folding axis 181.

According to an embodiment, if the display mode is changed from the horizontal mode to the vertical mode according to a rotation of the electronic device 1000, the electronic device 1000 may rotate the boundary 1a, and display the rotated first application A2 in the first area 10b, and display the rotated second application B2 in the second area 20b divided according to the rotated boundary 1b.

Meanwhile, for improving productivity of the user, and providing a user experience that is more appropriate for a multitasking environment, if any one of the first housing part 110 or the third housing part 130 is in a partially folded state, the electronic device 1000 according to an embodiment of the disclosure may maintain the boundary 1a due to the partially folded state even if the display mode is changed (e.g.: changed from the horizontal mode to the vertical mode) according to a rotation of the electronic device 1000, and display the rotated first application A2 and the rotated second application B2 in each of the first area 10a and the second area 20a divided based on the boundary 1a.

FIG. 6A is a diagram for illustrating an electronic device providing a plurality of applications based on a boundary due to a partially folded state according to an embodiment of the disclosure.

Hereinafter, for the convenience of explanation, if the location of the boundary 1a dividing a screen in the multi-windows mode corresponds to the first folding axis 181 which is the central axis of the first hinge structure 150, the boundary will be referred to as the first boundary 1-1, and if the location corresponds to the second folding axis 182 which is the central axis of the second hinge structure 160, the boundary will be referred to as the second boundary 1-2.

Referring to FIG. 6A, in a partially folded state of the first housing part 110, the location of the first boundary 1-1 dividing the screen may correspond to the first folding axis 181, and the electronic device 1000 may display the first application A1 in the first area 10c, and display the second application B1 in the second area 20c divided based on the first boundary 1-1 due to the partially folded state of the first housing part 110 in the horizontal mode.

According to an embodiment, if it is identified that the display mode of the electronic device 1000 is changed from the horizontal mode to the vertical mode through the third sensor 363 according to a rotation of the electronic device 1000, the electronic device 1000 may identify whether the first housing part 110 is in a partially folded state based on the first folding angle detected through the first sensor 361, or identify whether the third housing part 130 is in a partially folded state based on the second folding angle detected through the second sensor 362.

According to an embodiment, if it is identified that the first housing part 110 is in a partially folded state in the vertical mode, the electronic device 1000 may display the rotated first application A2 in the first area 10c, and display the rotated second application B2 in the second area 20c divided based on the first boundary 1-1 due to the partially folded state of the first housing part 110.

Referring to FIG. 6A, in a partially folded state of the first housing part 110, if the display mode is changed (e.g.: changed from the horizontal mode to the vertical mode) according to a rotation of the electronic device 1000, the electronic device 1000 may maintain the first boundary 1-1, and display the rotated first application A2 and the rotated second application B2 in each of the first area 10c and the second area 20c divided based on the first boundary 1-1.

FIG. 6B is a diagram for illustrating an electronic device providing a plurality of applications based on a boundary due to a partially folded state according to an embodiment of the disclosure.

Referring to FIG. 6B, in a partially folded state of the third housing part 130, the location of the second boundary 1-2 dividing the screen may correspond to the second folding axis 182, and the electronic device 1000 may display the first application A1 in the first area 10d, and display the second application B1 in the second area 20d divided based on the second boundary 1-2 due to the partially folded state of the third housing part 130 in the horizontal mode.

According to an embodiment, a rotation of the electronic device 1000 may be detected through the third sensor 363, and the electronic device 1000 may identify the display mode of the electronic device 1000 as the vertical mode based on detecting the rotation of the electronic device 1000.

According to an embodiment, if it is identified that the third housing part 130 is in a partially folded state in the vertical mode, the electronic device 1000 may display the rotated first application A2 in the first area 10d, and display the rotated second application B2 in the second area 20d divided based on the second boundary 1-2 due to the partially folded state of the third housing part 130.

Referring to FIG. 6B, in a partially folded state of the third housing part 130, if the display mode is changed (e.g.: changed from the horizontal mode to the vertical mode) according to a rotation of the electronic device 1000, the electronic device 1000 may maintain the second boundary 1-2, and display the rotated first application A2 and the rotated second application B2 in each of the first area 10d and the second area 20d divided based on the second boundary 1-2.

However, the disclosure is not limited thereto, and in an unfolded state of the electronic device 1000, after the display mode is changed (e.g.: changed from the horizontal mode to the vertical mode) according to a rotation of the electronic device 1000, if the first housing part 110 is identified to be in a partially folded state according to the first folding angle, the electronic device 1000 may display the rotated first application A2 and the rotated second application B2 in each of the first area 10c and the second area 20c divided based on the first boundary 1-1. Detailed explanation in this regard will be described later with reference to FIG. 6C.

According to an embodiment, in an unfolded state of the electronic device 1000, after the display mode is changed (e.g.: changed from the horizontal mode to the vertical mode) according to a rotation of the electronic device 1000, if the third housing part 130 is identified to be in a partially folded state according to the second folding angle, the electronic device 1000 may display the rotated first application A2 and the rotated second application B2 in each of the first area 10d and the second area 20d divided based on the second boundary 1-2. Detailed explanation in this regard will be described later with reference to FIG. 6D.

FIG. 6C is a diagram for illustrating an electronic device providing a plurality of applications based on a boundary due to a partially folded state according to an embodiment of the disclosure.

Referring to FIG. 6C, if the electronic device 1000 rotates in an unfolded state of the electronic device 1000, the electronic device 1000 may change the display mode of the electronic device 1000 from the horizontal mode to the vertical mode.

For example, the electronic device 1000 may rotate the boundary 1a according to a rotation of the electronic device 1000, and display the rotated first application A2 and the rotated second application B2 in each of the first area 10b and the second area 20b divided based on the rotated boundary 1b.

According to an embodiment, if the first housing part 110 is identified to be in a partially folded state based on the first folding angle, the electronic device 1000 may display the rotated first application A2 in the first area 10c, and display the rotated second application B2 in the second area 20c divided based on the first boundary 1-1 due to the partially folded state of the first housing part 110, but not the rotated boundary 1b.

FIG. 6D is a diagram for illustrating an electronic device providing a plurality of applications based on a boundary due to a partially folded state according to an embodiment of the disclosure.

Referring to FIG. 6D, if the electronic device 1000 rotates in an unfolded state of the electronic device 1000, the electronic device 1000 may change the display mode of the electronic device 1000 from the horizontal mode to the vertical mode.

For example, the electronic device 1000 may rotate the boundary 1a according to a rotation of the electronic device 1000, and display the rotated first application A2 and the rotated second application B2 in each of the first area 10b and the second area 20b divided based on the rotated boundary 1b.

According to an embodiment, if the third housing part 130 is identified to be in a partially folded state based on the second folding angle, the electronic device 1000 may display the rotated first application A2 in the first area 10d, and display the rotated second application B2 in the second area 20d divided based on the second boundary 1-2 due to the partially folded state of the third housing part 130, but not the rotated boundary 1b.

In FIG. 6A to FIG. 6D, for the convenience of explanation, a case wherein the display mode of the electronic device 1000 is changed from the horizontal mode to the vertical mode was assumed, but the disclosure is not limited thereto.

For example, in the partially folded state of the first housing part 110, if the electronic device 1000 is changed from the vertical mode to the horizontal mode according to a rotation of the electronic device 1000, the electronic device 1000 may maintain the first boundary 1-1 due to the partially folded state of the first housing part 110, and display the first application A within the first area 10c, and display the second application B within the second area 20c divided based on the first boundary 1-1.

According to an embodiment, the electronic device 1000 may rotate the first application A2 displayed within the first area 10c divided based on the first boundary 1-1 in the vertical mode within the first area 10c in the horizontal mode, and display the first application A2.

According to an embodiment, the layout (or, the configuration, the content) of the first application A2 displayed within the first area 10c in the vertical mode may be different from the layout (or, the configuration, the content) of the first application A1 displayed within the first area 10c in the horizontal mode.

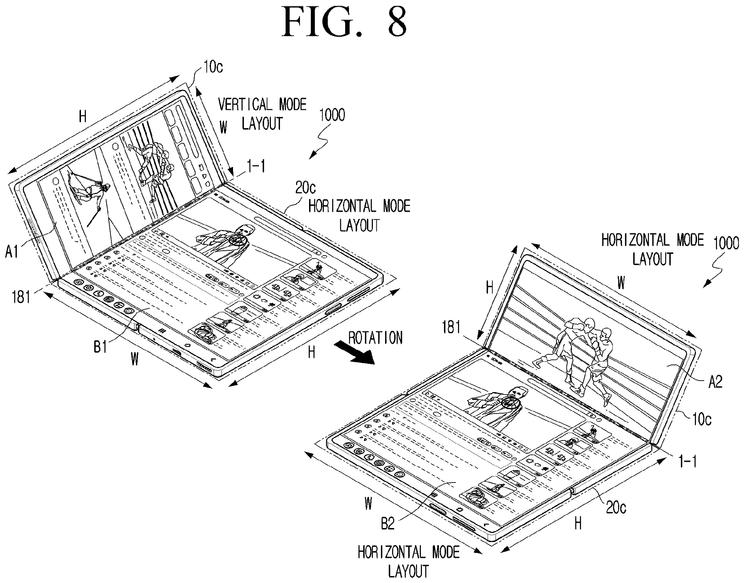

Also, the layout (or, the configuration, the content) of the second application B2 displayed within the second area 20c in the vertical mode may be different from the layout (or, the configuration, the content) of the second application B1 displayed within the second area 20c in the horizontal mode. Detailed explanation in this regard will be described later with reference to FIG. 8.

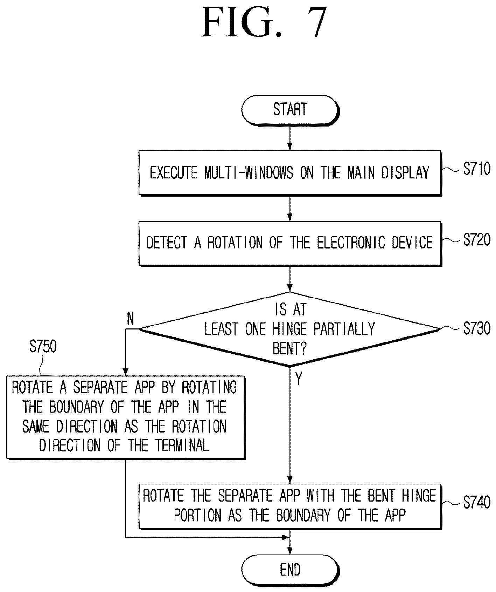

FIG. 7 is a flow chart for illustrating an electronic device providing a plurality of applications based on a boundary due to a partially folded state according to an embodiment of the disclosure.

The electronic device 1000 may perform at least one of the operations in FIG. 7. The instructions stored in the memory 320 of the electronic device 1000 may make the electronic device 1000 perform the operations in FIG. 7 when they are executed by the processor 310 of the electronic device 1000.

Referring to FIG. 7, in the operation S710, the electronic device 1000 may execute multi-windows on the main display. According to an embodiment, the main display may include the first display 331 arranged on one surface of each of the first housing part 110, the second housing part 120, and the third housing part 130.

According to an embodiment, the multi-windows may be a mode of displaying a plurality of applications (e.g.: the first application A1 and the second application B1) on the screen of the first display 331.

For example, the electronic device 1000 may divide the screen of the first display 331 and display the first application A1 in one area, and display the second application B1 in the remaining area. For example, the one area may be the first area 10a, and the remaining area may be the second area 20a.

According to an embodiment, in the operation S720, the electronic device 1000 may detect a rotation of the electronic device 1000 through the third sensor 363 (S720). For example, the electronic device 1000 may change the display mode from the horizontal mode to the vertical mode, or change the display mode from the vertical mode to the horizontal mode according to the rotation of the electronic device 1000 (e.g.: a rotation in approximately 90 degrees).

According to an embodiment, in the operation S730, the electronic device 1000 may identify whether at least one of the first hinge structure 150 or the second structure 160 is partially bent (or whether at least one of them is partially folded).

According to an embodiment, in the operations S730-Y and S740, if any one of the first housing part 110 or the third housing part 130 is identified to be in a partially folded state as at least one of the first hinge structure 150 or the second hinge structure 160 is partially bent, the electronic device 1000 may rotate the first application A1 and the second application B1 with the central axis of the bent hinge structure as the boundary of the applications.

For example, if the first housing part 110 is identified to be in a partially folded state as the first hinge structure 150 from among the first hinge structure 150 and the second hinge structure 160 is partially bent, the electronic device 1000 may rotate the first application A1 and the second application B1 based on the first boundary 1-1 corresponding to the central axis of the first hinge structure 150 (the first folding axis 181 in FIG. 1A). For example, if the third housing part 130 is identified to be in a partially folded state as the second hinge structure 160 is partially bent, the electronic device 1000 may rotate the first application A1 and the second application B1 based on the second boundary 1-2 corresponding to the second folding axis 182.

According to an embodiment, in the operations S730-N and S750, if the first hinge structure 150 and the second hinge structure 160 are not bent, and the electronic device 1000 is identified to be in an unfolded state, the electronic device 1000 may rotate the boundary 1a dividing the first area 10a and the second area 20a in the same direction as the rotation direction of the electronic device 1000 in the multi-windows mode in the operation S710, and display the first application A2 and the second application B2 in each of the first area 10b and the second area 20b divided based on the rotated boundary 1b.

FIG. 8 is a diagram for illustrating a horizontal mode layout and a vertical mode layout of an application according to an embodiment of the disclosure.

Referring to FIG. 8, if the first housing part 110 is identified to be in a partially folded state in the horizontal mode, the electronic device 1000 may display the first application A1 in the first area 10c corresponding to the first housing part 110, and display the second application B1 in the second area 20c corresponding to the second housing part 120 and the third housing part 130 based on the first boundary 1-1 corresponding to the central axis of the first hinge structure 150 connecting the first housing part 110 and the second housing part 120, i.e., the first folding axis 181.

According to an embodiment, the electronic device 1000 may display the first application A1 in any one of a horizontal mode layout or a vertical mode layout based on an aspect ratio of the first area 10c corresponding to the first housing part 110.

For example, each of the plurality of applications may include a horizontal mode layout or a vertical mode layout. For example, the first application A1 among the plurality of applications may include a horizontal mode layout appropriate for a screen wherein the width is relatively longer than the height, and a vertical mode layout appropriate for a screen wherein the height is relatively longer than the width.

For example, the first application A1 may arrange objects (or, contents) horizontally in the horizontal mode layout, and arrange objects vertically in the vertical mode layout.

However, the disclosure is not limited thereto, and the electronic device 1000 may relatively enlarge a video (e.g.: a video in a ratio of 16:9) or a game appropriate for being provided in the horizontal mode among the objects included in the first application A1, or arrange them in the upper part, or provide them within the first area 10c as the entire screen in the horizontal mode layout, and relatively enlarge a video (e.g.: a video in a ratio of 9:16), a text, or a message appropriate for being provided in the vertical mode among the objects included in the first application A1, or arrange them in the upper part, or provide them within the first area 10c as the entire screen in the vertical mode layout.

According to an embodiment, if the display mode of the electronic device 1000 is changed from the horizontal mode to the vertical mode according to a rotation of the electronic device 1000, the electronic device 1000 may maintain the first boundary 1-1 in the horizontal mode also in the vertical mode, and rotate the first application A1 in an opposite direction to the rotation direction of the electronic device 1000 and display the first application A1 in the first area 10c, and rotate the second application B1 in an opposite direction to the rotation direction of the electronic device 1000 and display the second application B1 in the second area 20c divided based on the first boundary 1-1.

According to an embodiment, if the display mode of the electronic device 1000 is changed from the horizontal mode to the vertical mode, the electronic device 1000 may display each of the first application A2 and the second application B2 in any one of the vertical mode layout or the horizontal mode layout.

For example, in the horizontal mode of the electronic device 1000, the electronic device 1000 may identify an aspect ratio of the first area 10c divided based on the first boundary 1-1 due to the partially folded state of the first housing part 110.

For example, in the horizontal mode, the electronic device 1000 may display the first application A1 in the vertical mode layout based on the aspect ratio of the first area 10c.

According to an embodiment, in the vertical mode of the electronic device 1000, the electronic device 1000 may maintain the first boundary 1-1 due to the partially folded state of the first housing part 110, and display the first application A2 according to the horizontal mode layout based on the aspect ratio of the first area 10c divided based on the first boundary 1-1.

For example, in the horizontal mode of the electronic device 1000, the first area 10c has a characteristic that the vertical length (or, the height) is relatively shorter than the horizontal length (or, the width), and the electronic device 1000 may display the first application A1 in the vertical mode layout based on the aspect ratio of the first area 10c.

For example, if the display mode is changed from the horizontal mode to the vertical mode according to a rotation of the electronic device 1000, the first area 10c has a characteristic that the vertical length (or, the height) is relatively longer than the horizontal length (or, the width), and the electronic device 1000 may display the first application A2 in the horizontal mode layout based on the aspect ratio of the first area 10c.

According to an embodiment, the horizontal length (or, the width) of the second area 20c in the horizontal mode of the electronic device 1000 may correspond to the vertical length (or, the height) of the second area 20c in the vertical mode of the electronic device 1000, and the vertical length (or, the height) of the second area 20c in the horizontal mode of the electronic device 1000 may correspond to the horizontal length (or, the width) of the second area 20c in the vertical mode of the electronic device 1000.

For example, if the aspect ratio of the second area 20c is 1:1 in the horizontal mode of the electronic device 1000, the aspect ratio of the second area 20c in the vertical mode may be 1:1, and if the aspect ratio of the second area 20c is 9:8 (or, 1.125:1) in the horizontal mode of the electronic device 1000, the aspect ratio of the second area 20c in the vertical mode may be 8:9 (or, 1:1.125), and if the aspect ratio of the second area 20c is 4:3 in the horizontal mode of the electronic device 1000, the aspect ratio of the second area 20c in the vertical mode may be 3:4.

According to an embodiment, in the horizontal mode of the electronic device 1000, the vertical length and the horizontal length of the second area 20c may be similar, and the electronic device 1000 may display the second application B1 in the horizontal mode layout based on the aspect ratio of the second area 20c.

For example, if the display mode is changed from the horizontal mode to the vertical mode according to a rotation of the electronic device 1000, the vertical length of the second area 20c may be similar to the horizontal length, and the electronic device 1000 may rotate the second application B1 (i.e., the rotated second application B2) in the horizontal mode layout based on the aspect ratio of the second area 20c, and display the second application B2.

In the aforementioned example, a case wherein the first boundary 1-1 due to the partially folded state of the first housing part 110 divides the screen into the first area 10c and the second area 20c was assumed for the convenience of explanation, but the disclosure is obviously not limited thereto.

For example, the second boundary 1-2 due to the partially folded state of the third housing part 130 may divide the screen into the first area 10d and the second area 20d.

According to an embodiment, the electronic device 1000 may display the first application A1 in the first area 10d corresponding to the first housing part 110 and the second housing part 120, and display the second application B1 in the second area 20d corresponding to the third housing part 130 in the horizontal mode of the electronic device 1000.

For example, in the horizontal mode of the electronic device 1000, the electronic device 1000 may identify an aspect ratio of the second area 20d divided based on the second boundary 1-2 due to the partially folded state of the third housing part 130. For example, in the horizontal mode, the electronic device 1000 may display the second application B1 in the vertical mode layout based on the aspect ratio of the second area 20d.

According to an embodiment, if the display mode of the electronic device 1000 is changed from the horizontal mode to the vertical mode, the electronic device 1000 may maintain the second boundary 1-2 due to the partially folded state of the third housing part 130, and display the second application B2 in the horizontal mode layout based on the aspect ratio of the second area 20d divided based on the second boundary 1-2.

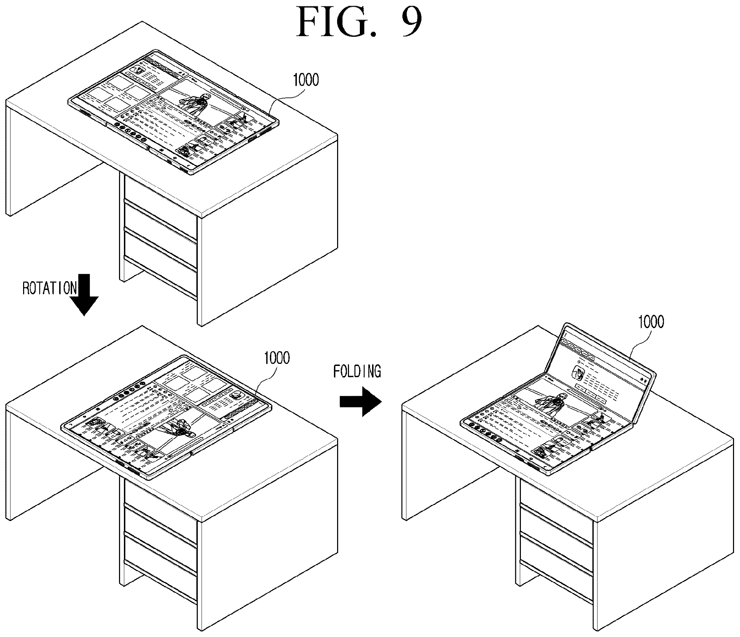

FIG. 9 is a diagram for illustrating an electronic device that provides, when the electronic device is changed to a partially folded state from an unfolded state, a plurality of applications based on a boundary due to the partially folded state according to an embodiment of the disclosure.

According to an embodiment, if the electronic device 1000 rotates, the electronic device 1000 may detect a rotation of the electronic device 1000 through the sensor 360. For example, the third sensor 363 may include a gyroscope and an accelerometer.

According to an embodiment, the gyroscope may detect which axis the electronic device 1000 is centered around when rotating by measuring angular velocity when the electronic device 1000 rotates, and detect a movement of the electronic device 1000.

According to an embodiment, the accelerometer may detect acceleration of gravity. For example, if the electronic device 1000 is gripped in the vertical direction by the user, the accelerometer may detect acceleration of gravity according to the vertical axis of the electronic device 1000, and if the electronic device 1000 is gripped in the horizontal direction by the user, the accelerometer may detect acceleration of gravity according to the horizontal axis of the electronic device 1000.

The electronic device 1000 may identify the direction (or, the display mode, or the direction of the screen) of the electronic device 1000 as any one of the vertical direction (or, the vertical mode) or the horizontal direction (or, the horizontal mode) through the third sensor 363.

According to an embodiment, as illustrated in FIG. 9, if the electronic device 1000 rotates while being placed on a desk, the electronic device 1000 cannot detect a rotation of the electronic device 1000 through the third sensor 363.

For example, the electronic device 1000 may detect acceleration of gravity through the accelerometer, and detect a change of the display mode according to a rotation of the electronic device 1000. However, if the electronic device 1000 rotates while being placed on a flat surface such as a desk, gravity is applied only in an up-down direction of the electronic device 1000, and accordingly, the electronic device 1000 cannot detect a change of gravity for an axis necessary for detecting a change of the display mode through the accelerometer, and thus the electronic device 1000 may not identify a change of the display mode according to the rotation of the electronic device 1000.

According to an embodiment, in the unfolded state of the electronic device 1000, if the first housing part 110 is identified to be in a partially folded state according to the first folding angle, the electronic device 1000 may display the rotated first application A2 in the first area 10c, and display the rotated second application B2 in the second area 20c divided based on the first boundary 1-1.

According to an embodiment, in the unfolded state of the electronic device 1000, if the third housing part 130 is identified to be in a partially folded state according to the second folding angle, the electronic device 1000 may display the rotated first application A2 in the first area 10d, and display the rotated second application B2 in the second area 20d divided based on the second boundary 1-2.

For example, while the electronic device 1000 is placed on a flat surface such as a desk, if any one of the first housing part 110 or the third housing part 130 is identified to be in a partially folded state, the electronic device 1000 may input information on the first application A1 corresponding to the first application A1 and information on the second application B1 corresponding to the second application B1 into a neural network model, and identify the display mode of the electronic device 1000.

According to an embodiment, the neural network model is characterized by the feature of, based on use history information including information on each of a plurality of applications displayed on the first display 331 and information on the display mode of the electronic device 1000 while the plurality of applications are being displayed, if the information on the first application A1 and the information on the second application B1 are input, identifying any one of the horizontal mode or the vertical mode as the display mode.

For example, the use history information may include a plurality of use histories wherein the electronic device 1000 displays the first application A2 reproducing an image content in the first area 10c, and displays the second application B2 displaying a web page in the second area 20c divided based on the first boundary 1-1 due to the partially folded state of the first housing part 110 in the vertical mode.

According to an embodiment, while the electronic device 1000 is displaying the first application A1, and displaying the second application B1 in a state of being placed on a flat surface such as a desk, if the first housing part 110 is identified to be in a partially folded state, the electronic device 1000 may input the information on the first application A1 and the information on the second application B1 into the neural network model.

According to an embodiment, if the information on the first application A1 and the information on the second application B1 are input, the neural network model may output the vertical mode as the display mode of the electronic device 1000 based on the use history information.

According to an embodiment, as illustrated in FIG. 9, even if the electronic device 1000 rotates while being placed on a flat surface such as a desk, if the first housing part 110 is identified to be in a partially folded state, the electronic device 1000 may change the display mode of the electronic device 1000 from the horizontal mode to the vertical mode, and rotate each of the first application A1 and the second application B1.

However, the disclosure is not limited thereto. For example, the use history information may include a plurality of use histories wherein the electronic device 1000 displays the first application A1 reproducing an image content in the first area 10c, and displays the second application B1 displaying a web page in the second area 20c divided based on the first boundary 1-1 due to the partially folded state of the first housing part 110 in the horizontal mode.

According to an embodiment, while the electronic device 1000 is displaying the first application A1, and displaying the second application B1 in a state of being placed on a flat surface such as a desk, if the first housing part 110 is identified to be in a partially folded state, the electronic device 1000 may input the information on the first application A1 and the information on the second application B1 into the neural network model. According to an embodiment, when the information on the first application A1 and the information on the second application B1 are input, the neural network model may output the horizontal mode as the display mode of the electronic device 1000 based on the use history information.

According to an embodiment, as illustrated in FIG. 9, while the electronic device 1000 is placed on a flat surface such as a desk, if any one of the first housing part 110 or the third housing part 130 is identified to be in a partially folded state, the neural network model may identify the display mode of the electronic device 1000 as any one of the horizontal mode or the vertical mode based on the use history information.

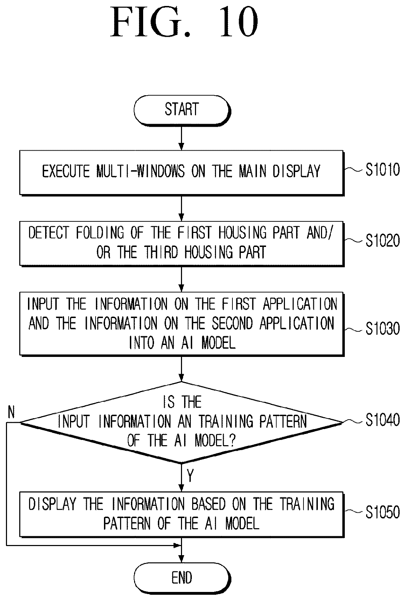

FIG. 10 is a flow chart for illustrating an electronic device that provides, when the electronic device is changed to a partially folded state from an unfolded state, a plurality of applications based on a boundary due to the partially folded state according to an embodiment of the disclosure.

FIG. 10 is a flow chart for illustrating an electronic device that provides a plurality of applications based on a boundary due to the partially folded state according to an embodiment of the disclosure.

The electronic device 1000 may perform at least one of the operations in FIG. 10. The instructions stored in the memory 320 of the electronic device 1000 may make the electronic device 1000 perform the operations in FIG. 10 when they are executed by the processor 310 of the electronic device 1000.

Referring to FIG. 10, in the operation S1010, the electronic device 1000 may execute multi-windows on the main display. According to an embodiment, the main display may include the first display 331.

For example, the electronic device 1000 may divide the screen of the first display 331 and display the first application A1 in the first area 10a, and display the second application B1 in the second area 20a.

According to an embodiment, in the operation S1020, the electronic device 1000 may detect folding of the first housing part 110 and/or the third housing part 130.

For example, if the first housing part 110 is identified to be in a partially folded state based on the first folding angle detected through the first sensor 361, or the third housing part 130 is identified to be in a partially folded state based on the second folding angle detected through the second sensor 362, the electronic device 1000 may input the information on the first application A1 and the information on the second application B1 into an AI model in the operation S1030.

According to an embodiment, the electronic device 1000 may identify whether the input information is an training pattern of the AI model in the operation S1040. According to an embodiment, if it is Y ('Yes') in the operation S1040, the AI model may output a display mode corresponding to the information on the first application A1 and the information on the second application B1 based on the training pattern of the AI model in the operation S1050. For example, the training pattern of the AI model may include the use history information explained in FIG. 9.

According to an embodiment, the electronic device 1000 may rotate the first application A1 and display it within the first area 10c, and rotate the second application B1 and display it within the second area 20c divided according to the first boundary 1-1 due to the partially folded state of the first housing part 110 based on the display mode.

According to an embodiment, the electronic device 1000 may rotate the first application A2 and display it within the first area 10d, and rotate the second application B2 and display it within the second area 20d divided according to the second boundary 1-2 due to the partially folded state of the third housing part 130 based on the display mode.

According to an embodiment, the AI model may be trained to output the display mode (e.g.: the horizontal mode or the vertical mode) of the electronic device 1000 when the information on the first application A1 and the information on the second application B1 that are currently being displayed on the first display 331 are input, by using whether the electronic device 1000 rotates (e.g.: the display mode of the electronic device 1000), a sensing value of the third sensor 363, the first folding angle, the second folding angle, the plurality of applications displayed on the first display 331, and the ratio of the first area 10a and the second area 20a as the training data.

According to an embodiment, if any one of the first housing part 110 or the third housing part 130 is identified to be in a partially folded state based on the first folding angle and the second folding angle, the electronic device 1000 may input the information on the first application A1 and the information on the second application B1 that are currently being displayed on the first display 331 into the AI model, and obtain the display mode of the electronic device 1000 from the AI model.

According to an embodiment, the electronic device 1000 may rotate the first application A1 within the first area 10a and the second application B1 within the second area 20a based on the display mode obtained from the AI model.

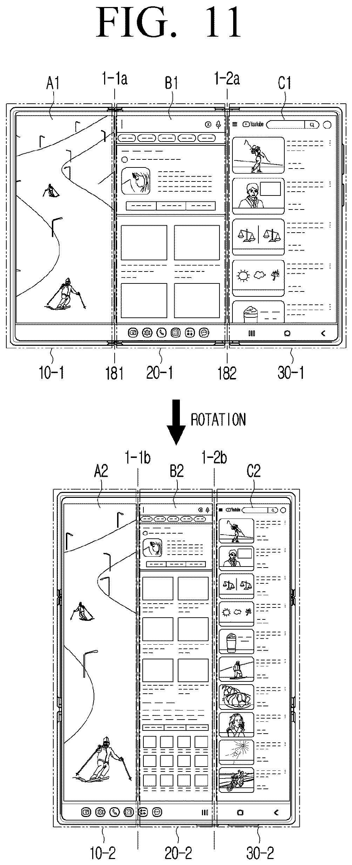

FIG. 11 is a diagram for illustrating a display mode of an electronic device providing a plurality of applications according to an embodiment of the disclosure.

Referring to FIG. 11, the electronic device 1000 may divide the screen into a first area 10-1, a second area 20-1, and a third area 30-1 in the multi-windows mode, and display the first application A1 in the first area 10-1, display the second application B1 in the second area 20-1, and display the third application C1 in the third area 30-1.

According to an embodiment, the electronic device 1000 may divide the first display 331 into the first area 10-1, the second area 20-1, and the third area 30-1 based on a first boundary 1-1a and a second boundary 1-2a.

In the horizontal mode of the electronic device 1000, the first boundary 1-1a may be the first folding axis 181 as illustrated in FIG. 11, but the disclosure is obviously not limited thereto. The first folding axis 181 illustrated in FIG. 11 may correspond to the central axis of the first hinge structure 150 that rotatably couples the first housing part 110 and the second housing part 120.

In the horizontal mode of the electronic device 1000, the second boundary 1-2a may be the second folding axis 182 as illustrated in FIG. 11, but the disclosure is obviously not limited thereto. The second folding axis 182 illustrated in FIG. 11 may correspond to the central axis of the second hinge structure 160 that rotatably couples the second housing part 120 and the third housing part 130.

According to an embodiment, the first area 10-1 may correspond to the first housing part 110, the second area 20-1 may correspond to the second housing part 120, and the third area 30-1 may correspond to the third housing part 130.

However, the disclosure is not limited thereto, and the first boundary 1-1a and the second boundary 1-2a may be changed according to the user's setting on the first display 331. For example, the electronic device 1000 may divide the first display 331 into the first area 10-1 to the third area 30-1 based on the first boundary 1-1a and the second boundary 1-2a according to the user's setting.

If the display mode of the electronic device 1000 is changed from the horizontal mode to the vertical mode through the third sensor 363 according to a rotation of the electronic device 1000, the electronic device 1000 may rotate the first boundary 1-1a and the second boundary 1-2a.

According to an embodiment, even if the display mode (or, the direction of the screen) of the electronic device 1000 is changed, the electronic device 1000 may locate the rotated first boundary 1-1b and the rotated second boundary 1-2b on the first display 331, such that the ratio among the first area 10-2, the second area 20-2, and the third area 30-2 in the display mode after the change (e.g.: the vertical mode) corresponds to the ratio among the first area 10-1, the second area 20-1, and the third area 30-1 in the display mode before the change (e.g.: the horizontal mode).

According to an embodiment, the electronic device 1000 may display the rotated first application A2, the rotated second application B2, and the rotated third application C2 in each of the first area 10-2, the second area 20-2, and the third area 30-2 divided based on the rotated first boundary 1-1b and the rotated second boundary 1-2b.

For example, if the electronic device 1000 is changed from the horizontal mode to the vertical mode according to a rotation of the electronic device 1000, the electronic device 1000 may locate the rotated first boundary 1-1b and the rotated second boundary 1-2b on the first display 331 in the vertical mode of the electronic device 1000, such that the ratio of the width of the first area 10-1, the width of the second area 20-1, and the width of the third area 30-1 to the width of the electronic device 1000 (the long side surface of the electronic device 1000) in the horizontal mode of the electronic device 1000 is also maintained in the vertical mode.

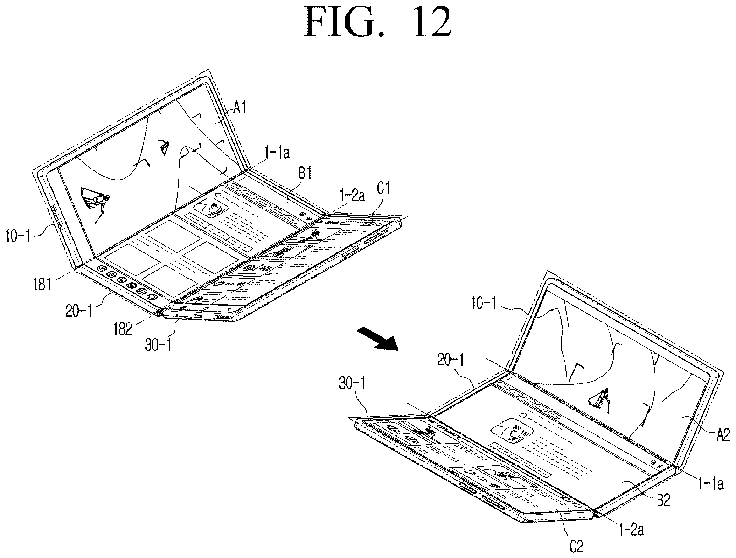

FIG. 12 is a diagram for illustrating an electronic device providing a plurality of applications based on a boundary due to a partially folded state according to an embodiment of the disclosure.

Referring to FIG. 12, in a state wherein each of the first housing part 110 and the third housing part 130 is partially folded, the electronic device 1000 may display the first application A1 in the first area 10-1 divided based on the first boundary 1-1a due to the partially folded state of the first housing part 110, and display the third application C1 in the third area 30-1 divided based on the second boundary 1-2a, and display the second application B1 in the second area 20-1 divided based on the first boundary 1-1a and the second boundary 1-2a in the horizontal mode.

According to an embodiment, if it is identified that the display mode of the electronic device 1000 was changed from the horizontal mode to the vertical mode through the third sensor 363 according to a rotation of the electronic device 1000, the electronic device 1000 may identify whether the first housing part 110 is in a partially folded state based on the first folding angle detected through the first sensor 361, or identify whether the third housing part 130 is in a partially folded state based on the second folding angle detected through the second sensor 362.

According to an embodiment, if it is identified that each of the first housing part 110 and the third housing part 130 is in a state of being partially folded, the electronic device 1000 may display the rotated first application A2, the rotated second application B2, and the rotated third application C2 in each of the first area 10-1 to the third area 30-1 divided based on the first boundary 1-1a and the second boundary 1-2a due to the partially folded state.

Referring to FIG. 12, in a state wherein each of the first housing part 110 and the third housing part 130 is partially folded, if the display mode is changed (e.g.: changed from the horizontal mode to the vertical mode) according to a rotation of the electronic device 1000, the electronic device 1000 may maintain the first boundary 1-1a and the second boundary 1-2a due to the partially folded state, and rotate the first application A1 in an opposite direction to the rotation direction of the electronic device 1000 and display the first application A1 within the first area 10-1 divided according to the first boundary 1-1a.

Also, the electronic device 1000 may rotate the third application C1 in an opposite direction to the rotation direction of the electronic device 1000 and display the third application C1 within the third area 30-1 divided according to the second boundary 1-2a.

In addition, the electronic device 1000 may rotate the second application B1 in an opposite direction to the rotation direction of the electronic device 1000 and display the second application B1 within the second area 20-1 divided according to the first boundary 1-1a and the second boundary 1-2a.

According to an embodiment, the electronic device 1000 may rotate the first application A1 and display it in an area corresponding to the first housing part 110 in the vertical mode, or if a horizontal mode layout corresponding to the first application A1 is identified based on an aspect ratio of the first housing part 110, the electronic device 1000 may change the first application A1 from the vertical mode layout to the horizontal mode layout, and display it.

Also, the electronic device 1000 may rotate the second application B1 and display it in an area corresponding to the second housing part 120, or if a horizontal mode layout corresponding to the second application B1 is identified based on an aspect ratio of the second housing part 120, the electronic device 1000 may change the second application B1 from the vertical mode layout to the horizontal mode layout, and display it.

According to an embodiment, the electronic device 1000 may rotate the third application C1 and display it in an area corresponding to the third housing part 130, or if a horizontal mode layout corresponding to the third application C1 is identified based on an aspect ratio of the third housing part 130, the electronic device 1000 may change the third application C1 from the vertical mode layout to the horizontal mode layout, and display it.

However, the disclosure is not limited thereto, and in an unfolded state of the electronic device 1000, after the display mode is changed (e.g.: changed from the horizontal mode to the vertical mode) according to a rotation of the electronic device 1000, if the first housing part 110 is identified to be in a partially folded state according to the first folding angle, and the third housing part 130 is identified to be in a partially folded state according to the second folding angle, the electronic device 1000 may display the first application A2, the second application B2, and the third application C2 in each of the first area 10-1 to the third area 30-1 divided based on the first boundary 1-1a due to the partially folded state of the first housing part 110 and the second boundary 1-2a due to the partially folded state of the third housing part 130.

In the various embodiments of the disclosure, a case wherein the processor 310 divides the first area 10-1 and the second area 20-1 based on the first boundary 1-1a corresponding to the first folding axis 181 on the basis of the first folding angle, or divides the second area 20-1 and the third area 30-1 based on the second boundary 1-2a corresponding to the second folding axis 182 on the basis of the second folding angle was assumed, but the disclosure is not limited thereto.

According to an embodiment, in the horizontal mode of the electronic device 1000, the electronic device 1000 may divide the first area 10-1 and the second area 20-1 based on the first boundary 1-1a, and display the first application A1 in the first area 10-1, and display the second application B1 in the second area 20-1. According to an embodiment, the electronic device 1000 may fix the first boundary 1-1a according to the user setting.

According to an embodiment, if the display mode is changed from the horizontal mode to the vertical mode according to a rotation of the electronic device 1000, the electronic device 1000 may divide the first area 10-1 and the second area 20-1 based on the fixed first boundary 1-1a regardless of whether the first housing part 110 is in a partially folded state, and rotate the first application A1 in an opposite direction to the rotation direction of the electronic device 1000 and display the first application A1 in the first area 10-1, and rotate the second application B1 in an opposite direction to the rotation direction of the electronic device 1000 and display the second application B1 in the second area 20-1.

According to an embodiment, the electronic device 1000 may divide the first area 10-1, the second area 20-1, and the third area 30-1 based on the first boundary 1-1a and the second boundary 1-2a, and display the first application A1 in the first area 10-1, display the second application B1 in the second area 20-1, and display the third application C1 in the third area 30-1 in the horizontal mode of the electronic device 1000. According to an embodiment, the electronic device 1000 may fix the first boundary 1-1a and the second boundary 1-2a according to the user setting.

According to an embodiment, if the display mode is changed from the horizontal mode to the vertical mode according to a rotation of the electronic device 1000, the electronic device 1000 may divide the first area 10-1, the second area 20-1, and the third area 30-1 based on the fixed first boundary 1-1a and the fixed second boundary 1-2a regardless of whether each of the first housing part 110 and the third housing part 130 is in a partially folded state, and rotate the first application A1 in an opposite direction to the rotation direction of the electronic device 1000 and display the first application A1 in the first area 10-1, rotate the second application B1 in an opposite direction to the rotation direction of the electronic device 1000 and display the second application B1 in the second area 20-1, and rotate the third application C1 in an opposite direction to the rotation direction of the electronic device 1000 and display the third application C1 in the third area 30-1.

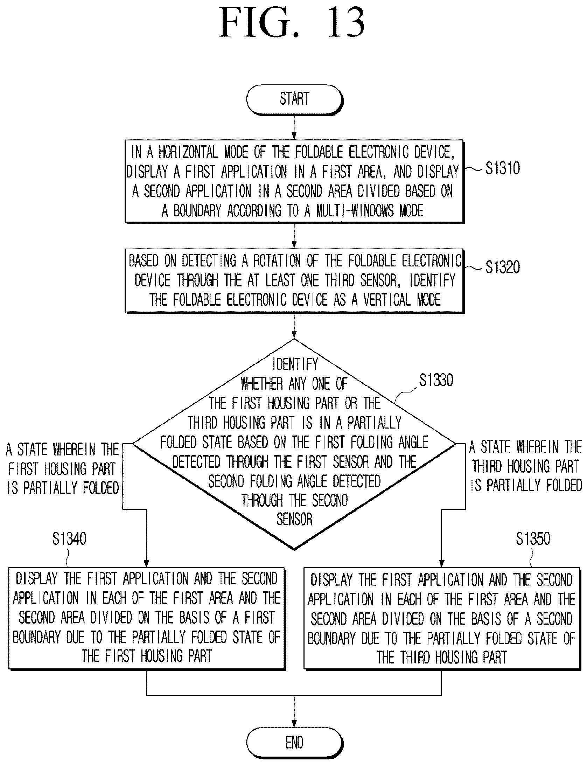

FIG. 13 is a flow chart for illustrating a control method of an electronic device according to an embodiment of the disclosure.

Referring to FIG. 13, in a control method of the electronic device 1000, the electronic device 1000 may include a first housing part 110, a second housing part 120 rotatably coupled to the first housing part 110, a third housing part 130 rotatably coupled to the second housing part 120, a first hinge structure 150 rotatably connecting the first housing part 110 and the second housing part 120, a second hinge structure 160 rotatably connecting the second housing part 120 and the third housing part 130, a first display 331 arranged on one surface of each of the first housing part 110, the second housing part 120, and the third housing part 130, a second display 332 arranged in a partial area of another surface on the opposite side of the first display 331, a first sensor 361 configured to detect a first folding angle between the first housing part 110 and the second housing part 120, a second sensor 362 configured to detect a second folding angle between the second housing part 120 and the third housing part 130, and at least one third sensor 363 configured to detect a rotation of the electronic device.

In the control method of the electronic device 1000 according to an embodiment, in the operation S1310, in a horizontal mode of the electronic device 1000, a first application may be displayed in a first area, and a second application may be displayed in a second area divided based on a boundary according to a multi-windows mode.

In the control method of the electronic device 1000 according to an embodiment, in the operation S1320, based on detecting a rotation of the foldable electronic device through the at least one third sensor, the foldable electronic device may be identified as a vertical mode.

In the control method of the electronic device 1000 according to an embodiment, in the operation S1330, it may be identified whether any one of the first housing part or the third housing part is in a partially folded state based on the first folding angle detected through the first sensor and the second folding angle detected through the second sensor.

In the control method of the electronic device 1000 according to an embodiment, based on identifying that the first housing part is in the partially folded state in the operation S1330, the first application and the second application may be displayed in each of the first area and the second area divided on the basis of a first boundary due to the partially folded state of the first housing part in the operation S1340.

In the control method of the electronic device 1000 according to an embodiment, based on identifying that the third housing part is in the partially folded state in the operation S1330, the first application and the second application may be displayed in each of the first area and the second area divided on the basis of a second boundary due to the partially folded state of the third housing part in the operation S1350.

According to an embodiment, in the operation S1310 of displaying the first application and the second application in the horizontal mode, based on the first housing part being identified to be in the partially folded state in the horizontal mode, the first application may be displayed in a vertical mode layout on the basis of an aspect ratio of the first area divided on the basis of the first boundary, and the second application may be displayed in a horizontal mode layout on the basis of an aspect ratio of the second area divided on the basis of the first boundary.

According to an embodiment, in the operation S1340 of displaying the first application and the second application in each of the first area and the second area divided based on the first boundary in the vertical mode, the first application may be displayed in a horizontal mode layout on the basis of an aspect ratio of the first area divided on the basis of the first boundary, and the second application may be displayed in a horizontal mode layout on the basis of an aspect ratio of the second area divided on the basis of the first boundary.

According to an embodiment, in the operation S1310 of displaying the first application and the second application in the horizontal mode, based on the third housing part being identified to be in the partially folded state in the horizontal mode, the first application may be displayed in a horizontal mode layout on the basis of an aspect ratio of the first area divided on the basis of the second boundary, and the second application may be displayed in a vertical mode layout on the basis of an aspect ratio of the second area divided on the basis of the second boundary.

According to an embodiment, in the operation S1350 of displaying the first application and the second application in each of the first area and the second area divided based on the second boundary in the vertical mode, the first application may be displayed in a horizontal mode layout on the basis of an aspect ratio of the first area divided on the basis of the second boundary, and the second application may be displayed in a horizontal mode layout on the basis of an aspect ratio of the second area divided on the basis of the second boundary.

The control method according to an embodiment may include an operation of, based on the electronic device being identified to be in an unfolded state on the basis of the first folding angle and the second folding angle in the vertical mode, rotating the boundary to correspond to the rotation.

The control method according to an embodiment may include an operation of displaying the first application in the first area, and displaying the second application in the second area divided based on the rotated boundary on the first display.

According to an embodiment, in the operation S1340 of displaying the first application and the second application in each of the first area and the second area divided based on the first boundary in the vertical mode, based on the first housing part being changed to the partially folded state from the unfolded state, the first application and the second application may be displayed in each of the first area and the second area divided on the basis of the first boundary due to the partially folded state of the first housing part.

According to an embodiment, in the operation S1350 of displaying the first application and the second application in each of the first area and the second area divided based on the second boundary in the vertical mode, based on the third housing part being changed to the partially folded state from the unfolded state, the first application and the second application may be displayed in each of the first area and the second area divided on the basis of the second boundary due to the partially folded state of the third housing part.

The control method according to an embodiment may include an operation of displaying the first application in an area corresponding to the first housing part, displaying the second application in an area corresponding to the second housing part, and displaying a third application in an area corresponding to the third housing part on the first display according to the multi-windows mode in the horizontal mode.

The control method according to an embodiment may include an operation of identifying whether each of the first housing part and the third housing part is in the partially folded state in the vertical mode.

The control method according to an embodiment may include an operation of, based on each of the first housing part and the third housing part being identified to be in the partially folded state in the vertical mode, displaying the first application in the area corresponding to the first housing part, displaying the second application in the area corresponding to the second housing part, and displaying the third application in the area corresponding to the third housing part.

The operation of displaying the first application to the third application in the vertical mode according to an embodiment may include an operation of displaying the first application in a horizontal mode layout in the area corresponding to the first housing part based on an aspect ratio of the first housing part in the vertical mode.

The operation of displaying the first application to the third application in the vertical mode according to an embodiment may include an operation of displaying the second application in a horizontal mode layout in the area corresponding to the second housing part based on an aspect ratio of the second housing part in the vertical mode.

The operation of displaying the first application to the third application in the vertical mode according to an embodiment may include an operation of displaying the third application in a horizontal mode layout in the area corresponding to the third housing part based on an aspect ratio of the third housing part in the vertical mode.

The control method according to an embodiment may include an operation of identifying by the electronic device that any one of the first housing part or the third housing part is changed to the partially folded state from the unfolded state based on the first folding angle and the second folding angle.

The control method according to an embodiment may include an operation of identifying any one of the horizontal mode or the vertical mode of the foldable electronic device by inputting information on the first application and information on the second application into a neural network model.

The control method according to an embodiment may include an operation of, based on being identified as the vertical mode and the first housing part being identified to be in the partially folded state, displaying the first application and the second application in each of the first area and the second area divided on the basis of the first boundary due to the partially folded state of the first housing part.

The control method according to an embodiment may include an operation of, based on being identified as the vertical mode and the third housing part being identified to be in the partially folded state, displaying the first application and the second application in each of the first area and the second area divided on the basis of the second boundary due to the partially folded state of the third housing part.

The neural network model according to an embodiment is characterized by the feature of, based on use history information including information on each of a plurality of applications displayed on the first display and information on the display mode of the electronic device while the plurality of applications are being displayed, if the information on each of the first application A1 and the information on the second application B1 displayed on the first display are input, outputting any one of the horizontal mode or the vertical mode.

The operation S1340 of displaying the first application and the second application in each of the first area and the second area divided based on the first boundary in the vertical mode according to an embodiment may include an operation of displaying the first application and the second application rotated according to a rotation of the foldable electronic device in each of the first area and the second area divided on the basis of the first boundary due to the partially folded state of the first housing part.

The operation S1350 of displaying the first application and the second application in each of the first area and the second area divided based on the second boundary in the vertical mode according to an embodiment may include an operation of displaying the first application and the second application rotated according to a rotation of the foldable electronic device in each of the first area and the second area divided on the basis of the second boundary due to the partially folded state of the third housing part.

The control method according to an embodiment may include an operation of, based on the foldable electronic device being changed from the vertical mode to the horizontal mode, displaying the first application and the second application in each of the first area and the second area divided on the basis of the first boundary due to the partially folded state of the first housing part, or displaying the first application and the second application in each of the first area and the second area divided on the basis of the second boundary due to the partially folded state of the third housing part.

According to an embodiment, a foldable electronic device (e.g.: the electronic device 1000 in FIG. 3A) may include a display (e.g.: at least one of the first display 331 or the second display 332 in FIG. 3A) and at least one processor (e.g.: the processor 310 in FIG. 3A). The foldable electronic device according to an embodiment of the disclosure includes a first housing part, a second housing part rotatably coupled to the first housing part, a third housing part rotatably coupled to the second housing part, a first hinge structure rotatably connecting the first housing part and the second housing part, a second hinge structure rotatably connecting the second housing part and the third housing part, a first display arranged on one surface of each of the first housing part, the second housing part, and the third housing part, a second display arranged in a partial area of another surface on the opposite side of the first display, at least one first sensor configured to detect a first folding angle between the first housing part and the second housing part, at least one second sensor configured to detect a second folding angle between the second housing part and the third housing part, at least one third sensor configured to detect a rotation of the foldable electronic device, memory storing instructions and including at least one storage medium, and at least one processor including processing circuitry, wherein the instructions may be configured to, when executed by the at least one processor individually or collectively, cause the foldable electronic device to, in a horizontal mode of the foldable electronic device, display a first application in a first area, and display a second application in a second area divided based on a boundary according to a multi-windows mode, and based on detecting a rotation of the foldable electronic device through the at least one third sensor, identify the foldable electronic device as a vertical mode, identify whether any one of the first housing part or the third housing part is in a partially folded state based on the first folding angle detected through the first sensor and the second folding angle detected through the second sensor, and based on identifying that the first housing part is in the partially folded state in the vertical mode, display the first application and the second application in each of the first area and the second area divided on the basis of a first boundary due to the partially folded state of the first housing part, and based on identifying that the third housing part is in the partially folded state in the vertical mode, display the first application and the second application in each of the first area and the second area divided on the basis of a second boundary due to the partially folded state of the third housing part.

For example, the instructions may be configured to cause the foldable electronic device to, based on the first housing part being identified to be in the partially folded state in the horizontal mode, display the first application in a vertical mode layout on the basis of an aspect ratio of the first area divided on the basis of the first boundary, and display the second application in a horizontal mode layout on the basis of an aspect ratio of the second area divided on the basis of the first boundary, and based on the first housing part being identified to be in the partially folded state in the vertical mode, display the first application in a horizontal mode layout on the basis of an aspect ratio of the first area divided on the basis of the first boundary, and display the second application in a horizontal mode layout on the basis of an aspect ratio of the second area divided on the basis of the first boundary.

For example, the instructions may be configured to cause the foldable electronic device to, based on the third housing part being identified to be in the partially folded state in the horizontal mode, display the first application in a horizontal mode layout on the basis of an aspect ratio of the first area divided on the basis of the second boundary, and display the second application in a vertical mode layout on the basis of an aspect ratio of the second area divided on the basis of the second boundary, and based on the third housing part being identified to be in the partially folded state in the vertical mode, display the first application in a horizontal mode layout on the basis of an aspect ratio of the first area divided on the basis of the second boundary, and display the second application in a horizontal mode layout on the basis of an aspect ratio of the second area divided on the basis of the second boundary.

For example, the instructions may be configured to cause the foldable electronic device to display the first application in the first area, and display the second application in the second area divided based on the boundary in the horizontal mode, and based on the foldable electronic device being identified to be in an unfolded state on the basis of the first folding angle and the second folding angle in the vertical mode, rotate the boundary to correspond to the rotation, display the first application in the first area and display the second application in the second area divided based on the rotated boundary on the first display, and based on the first housing part being changed to the partially folded state from the unfolded state, display the first application and the second application in each of the first area and the second area divided on the basis of the first boundary due to the partially folded state of the first housing part, and based on the third housing part being changed to the partially folded state from the unfolded state, display the first application and the second application in each of the first area and the second area divided on the basis of the second boundary due to the partially folded state of the third housing part.

For example, the instructions may be configured to cause the foldable electronic device to display the first application in an area corresponding to the first housing part, display the second application in an area corresponding to the second housing part, and display a third application in an area corresponding to the third housing part on the first display according to the multi-windows mode in the horizontal mode, identify whether each of the first housing part and the third housing part is in the partially folded state in the vertical mode, and based on each of the first housing part and the third housing part being identified to be in the partially folded state, display the first application in the area corresponding to the first housing part, display the second application in the area corresponding to the second housing part, and display the third application in the area corresponding to the third housing part.

For example, the instructions may be configured to cause the foldable electronic device to display the first application in a horizontal mode layout in the area corresponding to the first housing part based on an aspect ratio of the first housing part in the vertical mode, display the second application in a horizontal mode layout in the area corresponding to the second housing part based on an aspect ratio of the second housing part in the vertical mode, and display the third application in a horizontal mode layout in the area corresponding to the third housing part based on an aspect ratio of the third housing part in the vertical mode.

For example, the instructions may be configured to cause the foldable electronic device to identify that any one of the first housing part or the third housing part is changed to the partially folded state from the unfolded state based on the first folding angle and the second folding angle, identify any one of the horizontal mode or the vertical mode of the foldable electronic device by inputting information on the first application and information on the second application into a neural network model, and based on being identified as the vertical mode and the first housing part being identified to be in the partially folded state, display the first application and the second application in each of the first area and the second area divided on the basis of the first boundary due to the partially folded state of the first housing part, and based on being identified as the vertical mode and the third housing part being identified to be in the partially folded state, display the first application and the second application in each of the first area and the second area divided on the basis of the second boundary due to the partially folded state of the third housing part.

For example, the neural network model may be trained to, based on use history information including information on each of a plurality of applications displayed on the first display and information on the display mode of the foldable electronic device while the plurality of applications are being displayed, based on the information on each of the first application and the second application displayed on the first display being input, output any one of the horizontal mode or the vertical mode.

For example, the instructions may be configured to cause the foldable electronic device to, based on the first housing part being identified to be in the partially folded state, display the first application and the second application rotated according to a rotation of the foldable electronic device in each of the first area and the second area divided on the basis of the first boundary due to the partially folded state of the first housing part, and based on the third housing part being identified to be in the partially folded state, display the first application and the second application rotated according to a rotation of the foldable electronic device in each of the first area and the second area divided on the basis of the second boundary due to the partially folded state of the third housing part.

For example, the instructions may be configured to cause the foldable electronic device to, based on the foldable electronic device being changed from the vertical mode to the horizontal mode, display the first application and the second application in each of the first area and the second area divided on the basis of the first boundary due to the partially folded state of the first housing part, or display the first application and the second application in each of the first area and the second area divided on the basis of the second boundary due to the partially folded state of the third housing part.

According to an embodiment, in a control method of a foldable electronic device (e.g.: a control method of the electronic device 1000 in FIG. 3A), the foldable electronic device includes a first housing part, a second housing part rotatably coupled to the first housing part, a third housing part rotatably coupled to the second housing part, a first hinge structure rotatably connecting the first housing part and the second housing part, a second hinge structure rotatably connecting the second housing part and the third housing part, a first display arranged on one surface of each of the first housing part, the second housing part, and the third housing part, a second display arranged in a partial area of another surface on the opposite side of the first display, at least one first sensor configured to detect a first folding angle between the first housing part and the second housing part, at least one second sensor configured to detect a second folding angle between the second housing part and the third housing part, and at least one third sensor configured to detect a rotation of the foldable electronic device, and in the method, in a horizontal mode of the foldable electronic device, a first application may be displayed in a first area, and a second application may be displayed in a second area divided based on a boundary according to a multi-windows mode.

In the control method of a foldable electronic device according to an embodiment, based on detecting a rotation of the foldable electronic device through the at least one third sensor, the foldable electronic device may be identified as a vertical mode.

In the control method of a foldable electronic device according to an embodiment, it may be identified whether any one of the first housing part or the third housing part is in a partially folded state based on the first folding angle detected through the first sensor and the second folding angle detected through the second sensor.

In the control method of a foldable electronic device according to an embodiment, based on identifying that the first housing part is in the partially folded state, the first application and the second application may be displayed in each of the first area and the second area divided on the basis of a first boundary due to the partially folded state of the first housing part.

For example, in the control method of a foldable electronic device, based on identifying that the third housing part is in the partially folded state, the first application and the second application may be displayed in each of the first area and the second area divided on the basis of a second boundary due to the partially folded state of the third housing part.

According to an embodiment, in the operation of displaying the first application and the second application in the horizontal mode, based on the first housing part being identified to be in the partially folded state in the horizontal mode, the first application may be displayed in a vertical mode layout on the basis of an aspect ratio of the first area divided on the basis of the first boundary, and the second application may be displayed in a horizontal mode layout on the basis of an aspect ratio of the second area divided on the basis of the first boundary.

According to an embodiment, in the operation of displaying the first application and the second application in each of the first area and the second area divided on the basis of the first boundary in the vertical mode, the first application may be displayed in a horizontal mode layout on the basis of an aspect ratio of the first area divided on the basis of the first boundary, and the second application may be displayed in a horizontal mode layout on the basis of an aspect ratio of the second area divided on the basis of the first boundary.

According to an embodiment, in the operation of displaying the first application and the second application in the horizontal mode, based on the third housing part being identified to be in the partially folded state in the horizontal mode, the first application may be displayed in a horizontal mode layout on the basis of an aspect ratio of the first area divided on the basis of the second boundary, and the second application may be displayed in a vertical mode layout on the basis of an aspect ratio of the second area divided on the basis of the second boundary.

According to an embodiment, in the operation of displaying the first application and the second application in each of the first area and the second area divided on the basis of the second boundary in the vertical mode, the first application may be displayed in a horizontal mode layout on the basis of an aspect ratio of the first area divided on the basis of the second boundary, and the second application may be displayed in a horizontal mode layout on the basis of an aspect ratio of the second area divided on the basis of the second boundary.

For example, the control method may include an operation of, based on the foldable electronic device being identified to be in an unfolded state on the basis of the first folding angle and the second folding angle in the vertical mode, rotating the boundary to correspond to the rotation.

For example, the control method may include an operation of displaying the first application in the first area, and displaying the second application in the second area divided based on the rotated boundary on the first display.

For example, in the operation of displaying the first application and the second application in each of the first area and the second area divided on the basis of the first boundary in the vertical mode, based on the first housing part being changed to the partially folded state from the unfolded state, the first application and the second application may be displayed in each of the first area and the second area divided on the basis of the first boundary due to the partially folded state of the first housing part.

For example, in the operation of displaying the first application and the second application in each of the first area and the second area divided on the basis of the second boundary in the vertical mode, based on the third housing part being changed to the partially folded state from the unfolded state, the first application and the second application may be displayed in each of the first area and the second area divided on the basis of the second boundary due to the partially folded state of the third housing part.

For example, the control method may include an operation of displaying the first application in an area corresponding to the first housing part, displaying the second application in an area corresponding to the second housing part, and displaying a third application in an area corresponding to the third housing part on the first display according to the multi-windows mode in the horizontal mode.

For example, the control method may include an operation of identifying whether each of the first housing part and the third housing part is in the partially folded state in the vertical mode.

For example, the control method may include an operation of, based on each of the first housing part and the third housing part being identified to be in the partially folded state in the vertical mode, displaying the first application in the area corresponding to the first housing part, displaying the second application in the area corresponding to the second housing part, and displaying the third application in the area corresponding to the third housing part.

For example, the operation of displaying the first application to the third application in the vertical mode may include an operation of displaying the first application in a horizontal mode layout in the area corresponding to the first housing part based on an aspect ratio of the first housing part in the vertical mode.

For example, the operation of displaying the first application to the third application in the vertical mode may include an operation of displaying the second application in a horizontal mode layout in the area corresponding to the second housing part based on an aspect ratio of the second housing part in the vertical mode.

For example, the operation of displaying the first application to the third application in the vertical mode may include an operation of displaying the third application in a horizontal mode layout in the area corresponding to the third housing part based on an aspect ratio of the third housing part in the vertical mode.

For example, the control method may include an operation of identifying, by the electronic device, that any one of the first housing part or the third housing part is changed to the partially folded state from the unfolded state based on the first folding angle and the second folding angle.

For example, the control method may include an operation of identifying any one of the horizontal mode or the vertical mode of the foldable electronic device by inputting information on the first application and information on the second application into a neural network model.

For example, the control method may include an operation of, based on being identified as the vertical mode and the first housing part being identified to be in the partially folded state, displaying the first application and the second application in each of the first area and the second area divided on the basis of the first boundary due to the partially folded state of the first housing part.

For example, the control method may include an operation of, based on being identified as the vertical mode and the third housing part being identified to be in the partially folded state, displaying the first application and the second application in each of the first area and the second area divided on the basis of the second boundary due to the partially folded state of the third housing part.

For example, the neural network model is characterized by the feature of, based on use history information including information on each of a plurality of applications displayed on the first display and information on the display mode of the electronic device while the plurality of applications are being displayed, if the information on each of the first application and the information on the second application displayed on the first display are input, outputting any one of the horizontal mode or the vertical mode.

For example, the operation of displaying the first application and the second application in each of the first area and the second area divided on the basis of the first boundary in the vertical mode may include an operation of displaying the first application and the second application rotated according to a rotation of the foldable electronic device in each of the first area and the second area divided on the basis of the first boundary due to the partially folded state of the first housing part.

For example, the operation of displaying the first application and the second application in each of the first area and the second area divided on the basis of the second boundary in the vertical mode may include an operation of displaying the first application and the second application rotated according to a rotation of the foldable electronic device in each of the first area and the second area divided on the basis of the second boundary due to the partially folded state of the third housing part.

For example, the control method may include an operation of, based on the foldable electronic device being changed from the vertical mode to the horizontal mode, displaying the first application and the second application in each of the first area and the second area divided on the basis of the first boundary due to the partially folded state of the first housing part, or displaying the first application and the second application in each of the first area and the second area divided on the basis of the second boundary due to the partially folded state of the third housing part.

Meanwhile, the aforementioned various embodiments may be implemented in a recording medium that can be read by a computer or a device similar to a computer by using software, hardware or a combination thereof. In some cases, the embodiments described in this specification may be implemented as the processor itself. According to implementation by software, the embodiments such as procedures and functions described in this specification may be implemented as separate software modules. Each of the software modules may perform one or more functions and operations described in this specification.

Meanwhile, computer instructions for performing processing operations of an electronic device according to the aforementioned various embodiments of the disclosure may be stored in a non-transitory computer-readable medium. Computer instructions stored in such a non-transitory computer-readable medium make the processing operations at the electronic device according to the aforementioned various embodiments performed by a specific machine, when the instructions are executed by the processor of the specific machine.

A non-transitory computer-readable medium refers to a medium that stores data semi-permanently, and is readable by machines, but not a medium that stores data for a short moment such as a register, a cache, and memory. As specific examples of a non-transitory computer-readable medium, there may be a CD, a DVD, a hard disc, a blue-ray disc, a USB, a memory card, ROM and the like.

Also, in the above, preferred embodiments of the disclosure have been shown and described, but the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. A foldable electronic device (1000) comprising:
a first housing part (110);
a second housing part (120) rotatably coupled to the first housing part (110);
a third housing part (130) rotatably coupled to the second housing part (120);
a first hinge structure (150) rotatably connecting the first housing part (110) and the second housing part (120);
a second hinge structure (160) rotatably connecting the second housing part (120) and the third housing part (130);
a first display (331) arranged on one surface of each of the first housing part (110), the second housing part (120), and the third housing part (130);
a second display (332) arranged in a partial area of another surface on the opposite side of the first display (331);
at least one first sensor (361) configured to detect a first folding angle between the first housing part (110) and the second housing part (120);
at least one second sensor (362) configured to detect a second folding angle between the second housing part (120) and the third housing part (130);
at least one third sensor (363) configured to detect a rotation of the foldable electronic device (1000);
memory storing instructions and including at least one storage medium; and
at least one processor (310) including processing circuitry,
wherein the instructions are configured to, when executed by the at least one processor (310) individually or collectively, cause the foldable electronic device (1000) to:
in a horizontal mode of the foldable electronic device (1000), display a first application (A1) in a first area (10a), and display a second application (B1) in a second area (20a) divided based on a boundary (1a) according to a multi-windows mode,
based on detecting a rotation of the foldable electronic device (1000) through the at least one third sensor (363), identify the foldable electronic device (1000) as a vertical mode,
identify whether any one of the first housing part (110) or the third housing part (130) is in a partially folded state based on the first folding angle detected through the first sensor (361) and the second folding angle detected through the second sensor (362),
based on identifying that the first housing part (110) is in the partially folded state in the vertical mode, display the first application (A2) and the second application (B2) in each of the first area (10c) and the second area (20c) divided on the basis of a first boundary (1-1) due to the partially folded state of the first housing part (110), and
based on identifying that the third housing part (130) is in the partially folded state in the vertical mode, display the first application (A2) and the second application (B2) in each of the first area (10d) and the second area (20d) divided on the basis of a second boundary (1-2) due to the partially folded state of the third housing part (130).

2. The foldable electronic device (1000) of claim 1,
wherein the instructions are configured to cause the foldable electronic device (1000) to:
based on the first housing part (110) being identified to be in the partially folded state in the horizontal mode, display the first application (A1) in a vertical mode layout on the basis of an aspect ratio of the first area (10c) divided on the basis of the first boundary (1-1), and display the second application (B1) in a horizontal mode layout on the basis of an aspect ratio of the second area (20c) divided on the basis of the first boundary (1-1), and
based on the first housing part (110) being identified to be in the partially folded state in the vertical mode, display the first application (A2) in a horizontal mode layout on the basis of an aspect ratio of the first area (10c) divided on the basis of the first boundary (1-1), and display the second application (B2) in a horizontal mode layout on the basis of an aspect ratio of the second area (20c) divided on the basis of the first boundary (1-1).

3. The foldable electronic device (1000) of claim 1 or 2,
wherein the instructions are configured to cause the foldable electronic device (1000) to:
based on the third housing part (130) being identified to be in the partially folded state in the horizontal mode, display the first application (A1) in a horizontal mode layout on the basis of an aspect ratio of the first area (10d) divided on the basis of the second boundary (1-2), and display the second application (B1) in a vertical mode layout on the basis of an aspect ratio of the second area (20d) divided on the basis of the second boundary (1-2), and
based on the third housing part (130) being identified to be in the partially folded state in the vertical mode, display the first application (A2) in a horizontal mode layout on the basis of an aspect ratio of the first area (10d) divided on the basis of the second boundary (1-2), and display the second application (B2) in a horizontal mode layout on the basis of an aspect ratio of the second area (20d) divided on the basis of the second boundary (1-2).

4. The foldable electronic device (1000) of any one of claims 1 to 3,
wherein the instructions are configured to cause the foldable electronic device (1000) to:
display the first application (A1) in the first area (10a), and display the second application (B1) in the second area (20a) divided based on the boundary (1a) in the horizontal mode,
based on the foldable electronic device (1000) being identified to be in an unfolded state on the basis of the first folding angle and the second folding angle in the vertical mode, rotate the boundary (1a) to correspond to the rotation,
display the first application (A2) in the first area (10b), and display the second application (B2) in the second area (20b) divided based on the rotated boundary (1b) on the first display (331), and
based on the first housing part (110) being changed to the partially folded state from the unfolded state, display the first application (A2) and the second application (B2) in each of the first area (10a) and the second area (20a) divided on the basis of the first boundary (1-1) due to the partially folded state of the first housing part (110), and
based on the third housing part (130) being changed to the partially folded state from the unfolded state, display the first application (A2) and the second application (B2) in each of the first area (10d) and the second area (20d) divided on the basis of the second boundary (1-2) due to the partially folded state of the third housing part (130).

5. The foldable electronic device (1000) of any one of claims 1 to 4,
wherein the instructions are configured to cause the foldable electronic device (1000) to:
display the first application (A1) in an area (10-1) corresponding to the first housing part (110), display the second application (B1) in an area (20-1) corresponding to the second housing part (120), and display a third application (C1) in an area (30-1) corresponding to the third housing part (130) on the first display (331) according to the multi-windows mode in the horizontal mode,
identify whether each of the first housing part (110) and the third housing part (130) is in the partially folded state in the vertical mode, and
based on each of the first housing part (110) and the third housing part (130) being identified to be in the partially folded state, display the first application (A2) in the area (10-1) corresponding to the first housing part (110), display the second application (B2) in the area (10-2) corresponding to the second housing part (120), and display the third application (C2) in the area (10-3) corresponding to the third housing part (130).

6. The foldable electronic device (1000) of claim 5,
wherein the instructions are configured to cause the foldable electronic device (1000) to:
display the first application (A2) in a horizontal mode layout in the area (10-1) corresponding to the first housing part (110) based on an aspect ratio of the first housing part (110) in the vertical mode,
display the second application (B2) in a horizontal mode layout in the area (10-2) corresponding to the second housing part (120) based on an aspect ratio of the second housing part (120) in the vertical mode, and
display the third application (C2) in a horizontal mode layout in the area (10-3) corresponding to the third housing part (130) based on an aspect ratio of the third housing part (130) in the vertical mode.

7. The foldable electronic device (1000) of any one of claims 1 to 6,
wherein the instructions are configured to cause the foldable electronic device (1000) to:
identify that any one of the first housing part (110) or the third housing part (130) is changed to the partially folded state from the unfolded state based on the first folding angle and the second folding angle,
identify any one of the horizontal mode or the vertical mode of the foldable electronic device (1000) by inputting information on the first application (A1) and information on the second application (B1) into a neural network model,
based on being identified as the vertical mode and the first housing part (110) being identified to be in the partially folded state, display the first application (A2) and the second application (B2) in each of the first area (10c) and the second area (20c) divided on the basis of the first boundary (1-1) due to the partially folded state of the first housing part (110), and
based on being identified as the vertical mode and the third housing part (130) being identified to be in the partially folded state, display the first application (A2) and the second application (B2) in each of the first area (10d) and the second area (20d) divided on the basis of the second boundary (1-2) due to the partially folded state of the third housing part (130).

8. The foldable electronic device (1000) of claim 7,
wherein the neural network model is trained to:
based on use history information including information on each of a plurality of applications displayed on the first display (331) and information on the display mode of the foldable electronic device (1000) while the plurality of applications are being displayed, based on the information on each of the first application (A1) and the second application (B1) displayed on the first display (331) being input, output any one of the horizontal mode or the vertical mode.

9. The foldable electronic device (1000) of any one of claims 1 to 8,
wherein the instructions are configured to cause the foldable electronic device (1000) to:
based on the first housing part (110) being identified to be in the partially folded state, display the first application (A2) and the second application (B2) rotated according to a rotation of the foldable electronic device (1000) in each of the first area (10c) and the second area (20c) divided on the basis of the first boundary (1-1) due to the partially folded state of the first housing part (110), and
based on the third housing part (130) being identified to be in the partially folded state, display the first application (A2) and the second application (B2) rotated according to a rotation of the foldable electronic device (1000) in each of the first area (10d) and the second area (20d) divided on the basis of the second boundary (1-2) due to the partially folded state of the third housing part (130).

10. The foldable electronic device (1000) of any one of claims 1 to 9,
wherein the instructions are configured to cause the foldable electronic device (1000) to:
based on the foldable electronic device (1000) being changed from the vertical mode to the horizontal mode, display the first application (A1) and the second application (B1) in each of the first area (10c) and the second area (20c) divided on the basis of the first boundary (1-1) due to the partially folded state of the first housing part (110), or display the first application (A1) and the second application (B1) in each of the first area (10d) and the second area (20d) divided on the basis of the second boundary (1-2) due to the partially folded state of the third housing part (130).

11. A control method of a foldable electronic device (1000),
wherein the foldable electronic device (1000) comprises:
a first housing part (110);
a second housing part (120) rotatably coupled to the first housing part (110);
a third housing part (130) rotatably coupled to the second housing part (120);
a first hinge structure (150) rotatably connecting the first housing part (110) and the second housing part (120);
a second hinge structure (160) rotatably connecting the second housing part (120) and the third housing part (130);
a first display (331) arranged on one surface of each of the first housing part (110), the second housing part (120), and the third housing part (130);
a second display (332) arranged in a partial area of another surface on the opposite side of the first display (331);
at least one first sensor (361) configured to detect a first folding angle between the first housing part (110) and the second housing part (120);
at least one second sensor (362) configured to detect a second folding angle between the second housing part (120) and the third housing part (130); and
at least one third sensor (363) configured to detect a rotation of the foldable electronic device (1000),
wherein the method comprises:
in a horizontal mode of the foldable electronic device (1000), displaying a first application (A1) in a first area (10a), and displaying a second application (B1) in a second area (20a) divided based on a boundary (1a) according to a multi-windows mode (S1310);
based on detecting a rotation of the foldable electronic device (1000) through the at least one third sensor (363), identifying the foldable electronic device (1000) as a vertical mode (S1320);
identifying whether any one of the first housing part (110) or the third housing part (130) is in a partially folded state based on the first folding angle detected through the first sensor (361) and the second folding angle detected through the second sensor (362) (S1330);
based on identifying that the first housing part (110) is in the partially folded state in the vertical mode, displaying the first application (A2) and the second application (B2) in each of the first area (10c) and the second area (20c) divided on the basis of a first boundary (1-1) due to the partially folded state of the first housing part (110) (S1340); and
based on identifying that the third housing part (130) is in the partially folded state in the vertical mode, displaying the first application (A2) and the second application (B2) in each of the first area (10d) and the second area (20d) divided on the basis of a second boundary (1-2) due to the partially folded state of the third housing part (130) (S1350).

12. The control method of claim 11,
wherein the displaying the first application (A1) and the second application (B1) in the horizontal mode (S1310) comprises:
based on the first housing part (110) being identified to be in the partially folded state in the horizontal mode, displaying the first application (A1) in a vertical mode layout on the basis of an aspect ratio of the first area (10c) divided on the basis of the first boundary (1-1), and displaying the second application (B1) in a horizontal mode layout on the basis of an aspect ratio of the second area (20c) divided on the basis of the first boundary (1-1), and
the displaying the first application (A2) and the second application (B2) in each of the first area (10c) and the second area (20c) divided on the basis of the first boundary (1-1) in the vertical mode (S1340) comprises:
displaying the first application (A2) in a horizontal mode layout on the basis of an aspect ratio of the first area (10c) divided on the basis of the first boundary (1-1), and displaying the second application (B2) in a horizontal mode layout on the basis of an aspect ratio of the second area (20c) divided on the basis of the first boundary (1-1).

13. The control method of any one of claim 11 or 12,
wherein the displaying the first application (A1) and the second application (B1) in the horizontal mode (S1310) comprises:
based on the third housing part (130) being identified to be in the partially folded state in the horizontal mode, displaying the first application (A1) in a horizontal mode layout on the basis of an aspect ratio of the first area (10d) divided on the basis of the second boundary (1-2), and displaying the second application (B1) in a vertical mode layout on the basis of an aspect ratio of the second area (20d) divided on the basis of the second boundary (1-2), and
the displaying the first application (A2) and the second application (B2) in each of the first area (10d) and the second area (20d) divided on the basis of the second boundary (1-2) in the vertical mode (S1350) comprises:
displaying the first application (A2) in a horizontal mode layout on the basis of an aspect ratio of the first area (10d) divided on the basis of the second boundary (1-2), and displaying the second application (B2) in a horizontal mode layout on the basis of an aspect ratio of the second area (20d) divided on the basis of the second boundary (1-2).

14. The control method of any one of claims 11 to 13,
wherein the method further comprises:
based on the foldable electronic device (1000) being identified to be in an unfolded state on the basis of the first folding angle and the second folding angle in the vertical mode, rotating the boundary (1a) to correspond to the rotation; and
displaying the first application (A2) in the first area (10b), and displaying the second application (B2) in the second area (20b) divided based on the rotated boundary (1b) on the first display (331), and
the displaying the first application (A2) and the second application (B2) in each of the first area (10c) and the second area (20c) divided on the basis of the first boundary (1-1) in the vertical mode (S1340) comprises:
based on the first housing part (110) being changed to the partially folded state from the unfolded state, displaying the first application (A2) and the second application (B2) in each of the first area (10c) and the second area (20c) divided on the basis of the first boundary (1-1) due to the partially folded state of the first housing part (110), and
the displaying the first application (A2) and the second application (B2) in each of the first area (10d) and the second area (20d) divided on the basis of the second boundary (1-2) in the vertical mode (S1350) comprises:
based on the third housing part (130) being changed to the partially folded state from the unfolded state, displaying the first application (A2) and the second application (B2) in each of the first area (10d) and the second area (20d) divided on the basis of the second boundary (1-2) due to the partially folded state of the third housing part (130).

15. A storage medium storing instructions that can be read by a computer,
wherein the instructions are configured to, when executed by at least one processor (310) of a foldable electronic device (1000) including a first housing part (110), a second housing part (120) rotatably coupled to the first housing, a third housing part (130) rotatably coupled to the second housing, a first hinge structure (150) rotatably connecting the first housing part (110) and the second housing part (120), a second hinge structure (160) rotatably connecting the second housing part (120) and the third housing part (130), a first display (331) arranged on one surface of each of the first housing part (110), the second housing part (120), and the third housing part (130), a second display (332) arranged in a partial area of another surface on the opposite side of the first display (331), at least one first sensor (361) configured to detect a first folding angle between the first housing part (110) and the second housing part (120), at least one second sensor (362) configured to detect a second folding angle between the second housing part (120) and the third housing part (130), and at least one third sensor (363) configured to detect a rotation of the foldable electronic device (1000), cause the foldable electronic device (1000) to:
in a horizontal mode of the foldable electronic device (1000), display a first application (A1) in a first area (10a), and display a second application (B1) in a second area (20a) divided based on a boundary (1a) according to a multi-windows mode,
based on detecting a rotation of the foldable electronic device (1000) through the at least one third sensor (363) configured to detect a rotation of the foldable electronic device (1000), identify the foldable electronic device (1000) as a vertical mode,
identify whether any one of the first housing part (110) or the third housing part (130) is in a partially folded state based on the first folding angle detected through the first sensor (361) and the second folding angle detected through the second sensor (362),
based on detecting that the first housing part (110) is in the partially folded state in the vertical mode, display the first application (A2) and the second application (B2) in each of the first area (10c) and the second area (20c) divided on the basis of a first boundary (1-1) due to the partially folded state of the first housing part (110), and
based on detecting that the third housing part (130) is in the partially folded state in the vertical mode, display the first application (A2) and the second application (B2) in each of the first area (10d) and the second area (20d) divided on the basis of a second boundary (1-2) due to the partially folded state of the third housing part (130).
